# EUROPEAN PATENT APPLICATION

(11) **EP 4 765 975 A1**
(43) Date of publication of application: **24.06.2026**
(21) Application number: 24864426.2
(22) Date of filing: 23.08.2024
(51) Int. Cl.: H04W 72/044

(54) **COMMUNICATION METHOD AND APPARATUS**

(30) Priority: 15.09.2023 CN 202311199794
(71) Applicant: HUAWEI TECHNOLOGIES CO., LTD., Shenzhen 518129 (CN)
(72) Inventor: ZHANG, Roujia, Shenzhen, Guangdong 518129 (CN); SUN, Fei, Shenzhen, Guangdong 518129 (CN)
(74) Representative: Gill Jennings & Every LLP
(86) International application number: PCT/CN2024/114284
(87) International publication number: WO 2025/055704

(57) **Abstract**

A communication method and apparatus are provided. The method includes: A gateway device receives a first request from a terminal, where the first request is for requesting to provide services of M network slices for the terminal, and M is a positive integer greater than or equal to 2. After determining first allowed NSSAI, the gateway device may send the first allowed NSSAI to the terminal. The first allowed NSSAI includes identifiers of N network slices in the M network slices, the N network slices include a network slice allowed by different core network devices to provide a service for the terminal, and N is a positive integer greater than or equal to 2 and less than or equal to M. According to the method, the gateway device may support network slicing. In addition, when the N network slices include a network slice allowed by different core network devices to provide a service for the terminal, the gateway device can quickly determine the first allowed NSSAI including the identifiers of the N network slices, to provide services of the N network slices for the terminal in a timely manner.

## Description

### CROSS-REFERENCE TO RELATED APPLICATIONS

This application claims priority to Chinese Patent Application No. 202311199794.4, filed with the China National Intellectual Property Administration on September 15, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of mobile communication technologies, various new services and application scenarios continuously emerge, and these services raise significantly distinct requirements on network functions, connectivity, security, and other aspects. If a single network is used to carry all these services, it is difficult to meet requirements for high bandwidth, low latency, and high reliability. However, deploying a separate network for each service would greatly increase costs. Therefore, this requires communication networks to meet different service requirements while possessing flexibility and scalability. To that end, 5th generation (5th generation, 5G) mobile communication systems propose the use of end-to-end network slicing (network slicing) to provide customized network services for users. A network slice may be regarded as a logical subnet, and network slices are isolated from each other, thereby enabling targeted delivery of services to users.

Currently, how a communication system including a gateway device supports network slices needs to be further studied.

### SUMMARY

This application provides a communication method and apparatus, so that a communication system including a gateway device can support a network slice.

**According to a first aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: After receiving a first request from a terminal, the gateway device may determine first allowed network slice selection assistance information (network slice selection assistance information, NSSAI), and send the first allowed NSSAI to the terminal. The first request is for requesting to provide services of M network slices for the terminal, and M is a positive integer greater than or equal to 2. The first allowed NSSAI includes identifiers of N network slices in the M network slices, the N network slices include a network slice allowed by different core network devices to provide a service for the terminal, and N is a positive integer greater than or equal to 2 and less than or equal to M.

According to the method, after the terminal requests the gateway device to provide the services of the M network slices for the terminal, the gateway device may determine the first allowed NSSAI, where the first allowed NSSAI includes the identifiers of the N network slices in the M network slices. In this way, the gateway device may support network slicing.

In addition, in the method, the N network slices include a network slice allowed by different core network devices (for example, different access and mobility management functions (access and mobility management function, AMF)) to provide a service for the terminal. Currently, after the terminal accesses an access network device, the access network device can communicate with only one AMF, and cannot quickly obtain the first allowed NSSAI including the identifiers of the N network slices. In the method, because the gateway device may communicate with a plurality of core network devices (for example, a plurality of AMFs), when the gateway device supports a termination mode 2, the gateway device can quickly determine the first allowed NSSAI including the identifiers of the N network slices, so that a success rate and efficiency of requesting a service of a network slice by the terminal can be improved, service continuity of the network slice can be ensured, and resource utilization of a core network device can be improved.

In a possible design, the gateway device may request first information from at least one core network device, where the first information is for determining the first allowed NSSAI. After receiving at least one piece of first information, the gateway device may determine the first allowed NSSAI based on the at least one piece of first information. According to this design, the gateway device may request the first information from each core network device in the at least one core network device, so that the at least one piece of first information can be quickly obtained, thereby quickly and accurately determining the first allowed NSSAI.

In a possible design, the first information includes at least one of the following:
1. First subscription information of the terminal, where the first subscription information indicates a network slice that the terminal subscribes to. According to this design, the gateway device can quickly and accurately determine the first allowed NSSAI based on the first subscription information of the terminal. In addition, in the method, the at least one core network device needs to send only the first subscription information to the gateway device, and the at least one core network device does not need to determine the first allowed NSSAI. Therefore, compute resources of the at least one core network device can be saved, and power consumption of the at least one core network device can be reduced.
2. Information indicating whether the terminal subscribes to P network slices in the M network slices, where P is a positive integer less than or equal to M. According to this design, the gateway device can quickly and accurately determine the first allowed NSSAI based on the information indicating whether the terminal subscribes to the P network slices in the M network slices. In addition, in the method, the at least one core network device needs to send, to the gateway device, only the information indicating whether the terminal subscribes to the P network slices in the M network slices, so that signaling overheads can be reduced, and the at least one core network device does not need to determine the first allowed NSSAI. Therefore, compute resources of the at least one core network device can be saved, and power consumption of the at least one core network device can be reduced.
3. At least one piece of second allowed NSSAI, where the at least one piece of second allowed NSSAI includes identifiers of Q network slices in the M network slices, Q is a positive integer less than or equal to M, and the Q network slices are network slices that are allowed by one of the at least one core network device to provide services for the terminal. According to this design, the gateway device can quickly and accurately determine the first allowed NSSAI based on the at least one piece of second allowed NSSAI, and a computing amount used by the gateway device to determine the first allowed NSSAI can be reduced. Therefore, compute resources of the gateway device can be saved, and power consumption of the gateway device can be reduced.

In a possible design, the gateway device may send a first message to a first core network device, where the first message is for requesting second information, and the second information is for determining the first allowed NSSAI. After receiving the second information from the first core network device, the gateway device determines the first allowed NSSAI based on the second information. According to this design, the gateway device can obtain the second information from the first core network device, where the second information is related to the first core network device and a third core network device. In this way, the terminal does not need to set up non-access stratum (non-access stratum, NAS) connections to a plurality of core network devices, and the gateway device can quickly and accurately determine the first allowed NSSAI based on the second information, thereby reducing a quantity of NAS connections set up between the terminal and the core network devices, and reducing power consumption of the terminal.

In a possible design, the gateway device may obtain a network slice list supported by the at least one core network device; and send third information to an access network device managed by the gateway device, where the third information indicates a first network slice list, and the first network slice list includes identifiers of all network slices supported by the at least one core network device. According to this design, the gateway device can integrate information about the at least one core network device, to better support a network slice. In addition, in this design, the access network device managed by the gateway device may obtain the first network slice list, to learn of all the network slices supported by the at least one core network device, and further perform more comprehensive admission management and/or mobility management on the terminal that uses a service of a network slice.

In a possible design, the gateway device may obtain a network slice list supported by the at least one core network device; and send fourth information to an access network device managed by the gateway device, where the fourth information indicates a network slice list supported by each core network device in the at least one core network device. According to this design, the gateway device can integrate information about the at least one core network device, to better support a network slice. In addition, in this design, the access network device managed by the gateway device may determine the network slice list supported by each core network device, to perform more comprehensive admission management and/or mobility management on the terminal that uses a service of a network slice, and/or determine the at least one core network device.

In a possible design, the gateway device obtains a network slice list supported by each tracking area (tracking area, TA) of at least one access network device managed by the gateway device; and sends fifth information to a second core network device, where the fifth information indicates a second network slice list, and the second network slice list includes identifiers of all network slices supported by each TA of the at least one access network device. According to this design, the gateway device can integrate information about the at least one access network device, to better support a network slice. In addition, in this design, the second core network device can obtain the second network slice list, to learn of all the network slices supported by each TA of the at least one access network device, and further perform more comprehensive mobility management on the terminal that uses a service of the network slice.

In a possible design, the gateway device obtains a network slice list supported by each TA of at least one access network device managed by the gateway device, and sends sixth information to a second core network device, where the sixth information indicates a network slice list supported by each TA of each access network device in the at least one access network device. According to this design, the gateway device can integrate information about the at least one access network device, to better support a network slice. In addition, in this design, the second core network device can learn of the network slices supported by each TA of the at least one access network device, to perform more comprehensive mobility management on the terminal that uses services of the network slices, and can determine the second information based on the network slices supported by each TA of the at least one access network device.

**According to a second aspect,** an embodiment of this application provides a communication method. The method may be performed by an access network device, or may be performed by a chip or a circuit disposed in the access network device. This is not limited in this application. For ease of description, an example in which the method is performed by the access network device is used for description below.

The method includes: The access network device sends a first request from a terminal to a gateway device that manages the access network device. The first request is for requesting to provide services of M network slices for the terminal, and M is a positive integer greater than or equal to 2. Then, the access network device may receive first allowed NSSAI from the gateway device, where the first allowed NSSAI includes N network slices in the M network slices, the N network slices include a network slice allowed by different core network devices to provide a service for the terminal, and N is a positive integer greater than or equal to 2 and less than or equal to M.

In a possible design, the access network device receives third information from the gateway device, where the third information indicates a first network slice list, and the first network slice list includes identifiers of all network slices supported by at least one core network device.

In a possible design, the access network device receives fourth information from the gateway device, where the fourth information indicates a network slice list supported by each of at least one core network device.

**According to a third aspect,** an embodiment of this application provides a communication method. The method may be performed by a core network device, or may be performed by a chip or a circuit disposed in the core network device. This is not limited in this application. For ease of description, an example in which the method is performed by a first core network device is used for description below.

The method includes: The first core network device sends second information to a gateway device after receiving a first message from the gateway device. The first message is for requesting second information, the second information is for determining first allowed NSSAI, the first allowed NSSAI includes N network slices, the N network slices belong to M network slices that request to provide a service for a terminal, the N network slices include a network slice allowed by different core network devices to provide a service for the terminal, and N is a positive integer greater than or equal to 2 and less than or equal to M.

In a possible design, the first core network device requests, in response to the first message, seventh information from a third core network device; and after receiving the seventh information, the first core network device determines the second information based on the seventh information.

In a possible design, the first core network device receives fifth information from the gateway device, where the fifth information indicates a second network slice list, and the second network slice list includes identifiers of all network slices supported by each tracking area TA of at least one access network device managed by the gateway device.

In a possible design, the first core network device receives sixth information from the gateway device, where the sixth information indicates a network slice list supported by each TA of each access network device in at least one access network device managed by the gateway device.

For technical effects that can be achieved in either of the second aspect or the third aspect, refer to the descriptions of the technical effects that can be achieved in the first aspect. Details are not described herein again.

**According to a fourth aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device receives a second request from a terminal, where the second request is for requesting to provide a service of a first network slice for the terminal. When a first access network device that provides a service for the terminal does not support the first network slice, the gateway device sends eighth information to the first access network device, where the eighth information indicates to redirect or hand over the terminal from the first access network device to a second access network device, the second access network device supports the first network slice, and the first access network device and the second access network device are access network devices managed by the gateway device.

According to the method, when the first access network device that provides a service for the terminal does not support the first network slice, if the gateway device receives the second request for requesting to provide the service of the first network slice for the terminal, the gateway device may send the eighth information in a timely manner, to redirect or hand over the terminal from the first access network device to the second access network device, thereby avoiding or reducing rejection caused by a fact that a cell accessed by the terminal does not support a requested network slice. In this way, the terminal can obtain the service of the first network slice in a timely manner.

In a possible design, the gateway device determines the second access network device.

In a possible design, the second request includes an identifier of the first network slice. The gateway device determines, based on a network slice list supported by at least one access network device managed by the gateway device and the identifier of the first network slice, that an access network device that supports the first network slice in the at least one access network device is the second access network device. According to this design, the gateway device can quickly and accurately determine the second access network device, thereby avoiding or reducing rejection caused by a fact that a cell accessed by the terminal does not support a requested network slice. In this way, the terminal can obtain the service of the first network slice in a timely manner.

In a possible design, the gateway device sends the second request to a first core network device. After receiving indication information of the second access network device from the first core network device, the gateway device determines the second access network device based on the indication information of the second access network device. According to this design, regardless of whether the gateway device has a NAS function, the gateway device can learn of the second core network device.

In a possible design, the gateway device determines that the first access network device does not support the first network slice, and determines that one or more core network devices connected to the gateway device support the first network slice.

In a possible design, the second request includes an identifier of the first network slice. The gateway device determines, based on a network slice list supported by the first access network device and the identifier of the first network slice, that the first access network device does not support the first network slice; and determines, based on a network slice list supported by one or more core network devices connected to the gateway device and the identifier of the first network slice, that the one or more core network devices support the first network slice. According to this design, the gateway device can quickly and accurately determine that the first access network device does not support the first network slice, and determine that the one or more core network devices connected to the gateway device support the first network slice. Then, the gateway device can indicate to redirect or hand over the terminal from the first access network device to the second access network device, thereby avoiding or reducing rejection caused by a fact that a cell accessed by the terminal does not support a requested network slice. In this way, the terminal can obtain the service of the first network slice in a timely manner.

In a possible design, the gateway device sends the second request to a first core network device. Then, the gateway device receives first indication information from the first core network device, where the first indication information indicates that the first access network device does not support the first network slice and that one or more core network devices connected to the gateway device support the first network slice. According to this design, regardless of whether the gateway device has a NAS function, the gateway device can learn that the first access network device does not support the first network slice and that the one or more core network devices connected to the gateway device support the first network slice.

**According to a fifth aspect,** an embodiment of this application provides a communication method. The method may be performed by a core network device, or may be performed by a chip or a circuit disposed in the core network device. This is not limited in this application. For ease of description, an example in which the method is performed by a first core network device is used for description below.

The method includes: The first core network device receives a second request from a gateway device, where the second request is for requesting to provide a service of a first network slice for a terminal. When a first access network device that provides a service for the terminal does not support the first network slice, the first core network device sends at least one of the following to the gateway device: indication information of a second access network device or first indication information. The second access network device supports the first network slice, and the second access network device is a target access network device of the terminal. The first indication information indicates that the first access network device does not support the first network slice and that one or more core network devices connected to the gateway device support the first network slice. The first access network device and the second access network device are access network devices managed by the gateway device.

**According to a sixth aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device receives a handover request from a first access network device, where the handover request is for requesting to hand over a terminal from the first access network device to a second access network device, and the first access network device is an access network device managed by the gateway device. The gateway device sends a third request to the second access network device depending on whether there is a connection between the gateway device and the second access network device, where the third request is for requesting to hand over the terminal from the first access network device to the second access network device.

According to the method, regardless of whether there is a connection between the gateway device and the second access network device, the gateway device may send the third request to the second access network device, to hand over the terminal to the second access network device, thereby implementing a handover procedure of the terminal.

In a possible design, when there is a connection between the gateway device and the second access network device, the gateway device directly sends the third request to the second access network device. According to this design, the gateway device can quickly send the third request to the second access network device, so that the terminal device can be quickly handed over to the second access network device.

In a possible design, when there is no connection between the gateway device and the second access network device, the gateway device sends the third request to the second access network device via a core network device. According to this design, the gateway device can send the third request to the second access network device via the core network device. In this way, even if there is no connection between the gateway device and the second access network device, the gateway device may send the third request to the second access network device, to hand over the terminal to the second access network device.

**According to a seventh aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device obtains first configuration information, where the first configuration information indicates transport layer configurations of U data bearers of a first apparatus, where U is a positive integer. The gateway device sends second configuration information to a second apparatus, where the second configuration information indicates transport layer configurations of V data bearers of the gateway device, where V is a positive integer. Then, the gateway device may receive data of a second network slice from the second apparatus by using the V data bearers, and send the data of the second network slice to the first apparatus by using the U data bearers.

According to the method, the gateway device may transmit the data of the second network slice between the first apparatus and the second apparatus, to avoid or reduce a case in which the data of the second network slice cannot be transmitted between the first apparatus and the second apparatus in a case of internet protocol (internet protocol, IP) unreachability between the first apparatus and the second apparatus, thereby improving user experience of the terminal, and improving reliability and stability of transmission of the data of the second network slice between the first apparatus and the second apparatus when uplink transmission and downlink transmission are unreliable.

Optionally, the first apparatus is a user plane function network element, and the second apparatus is an access network device; or the first apparatus is an access network device, and the second apparatus is a user plane function network element. When the first apparatus is an access network device, and the second apparatus is a user plane function network element, because the gateway device may communicate with a plurality of user plane functions (user plane function, UPF), if the plurality of UPFs jointly provide a downlink service of the second network slice, the gateway device may transmit data of the second network slice between the plurality of UPFs and the access network device by using the method. In this way, data transmission efficiency on a core network side can be improved, and sending of transport layer configurations of the plurality of UPFs from the gateway device to the access network device can be prevented or minimized, thereby reducing signaling overheads between the gateway device and the access network device.

In a possible design, when the first apparatus is an access network device, and the second apparatus is a user plane function network element, U is less than or equal to V. According to this design, the gateway device can transmit data of the second network slice between the plurality of UPFs and the access network device. In this way, data transmission efficiency on a core network side can be improved, and sending of transport layer configurations of the plurality of UPFs from the gateway device to the access network device can be prevented or minimized, thereby reducing signaling overheads between the gateway device and the access network device.

In a possible design, when the first apparatus is a user plane function network element, and the second apparatus is an access network device, U is greater than or equal to V. According to this design, the gateway device can transmit data of the second network slice between the plurality of UPFs and the access network device. In this way, data transmission efficiency on a core network side can be improved, and sending of transport layer configurations of the plurality of UPFs from the gateway device to the access network device can be prevented or minimized, thereby reducing signaling overheads between the gateway device and the access network device.

**According to an eighth aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device receives ninth information from a first core network device, where the ninth information indicates that a resource for providing a service of a third network slice for a terminal is overloaded or that a network element that provides the service of the third network slice for the terminal is faulty. Then, the gateway device determines that a fourth core network device provides the service of the third network slice for the terminal.

According to the method, when the resource for providing the service of the third network slice for the terminal is overloaded or the network element that provides the service of the third network slice for the terminal is faulty, the gateway device may determine that the fourth core network device provides the service of the third network slice for the terminal. In this way, the terminal can still obtain the service of the third network slice, thereby avoiding or reducing interruption of the service of the third network slice provided for the terminal.

In a possible design, the gateway device sends a context of the terminal to the fourth core network device, where the context is for triggering registration of the third network slice with the fourth core network device. According to this design, the fourth core network device can register the third network slice for the terminal, to provide the service of the third network slice for the terminal.

In a possible design, the gateway device sends the context of the terminal to the fourth core network device. The gateway device receives third configuration information from the fourth core network device, where the third configuration information indicates a transport layer configuration of a data bearer of a first user plane function network element. According to this design, the fourth core network device can indicate, to the gateway device, the transport layer configuration of the data bearer of the first user plane function network element. In this way, data of the third network slice can be transmitted by using the data bearer, thereby avoiding or reducing impact on data transmission of the third network slice.

In a possible design, the gateway device sends tenth information to the terminal, where the tenth information is for triggering setup of a NAS connection between the terminal and the fourth core network device. According to this design, the gateway device can trigger setup of the NAS connection between the terminal and the fourth core network device. In this way, the fourth core network device may provide the service of the third network slice for the terminal by using the NAS connection.

In a possible design, after receiving third configuration information from the first core network device, the gateway device sends the third configuration information to an access network device connected to the terminal. The third configuration information indicates a transport layer configuration of a data bearer of a first user plane function network element in the fourth core network device. According to this design, the gateway device can indicate, to the terminal, the transport layer configuration of the data bearer of the first user plane function network element. In this way, data of the third network slice can be transmitted by using the data bearer, thereby avoiding or reducing impact on data transmission of the third network slice.

**According to a ninth aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device obtains a network slice list supported by at least one core network device, and sends third information to an access network device managed by the gateway device, where the third information indicates a first network slice list, and the first network slice list includes identifiers of all network slices supported by the at least one core network device.

**According to a tenth aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device obtains a network slice list supported by at least one core network device, and sends fourth information to an access network device managed by the gateway device, where the fourth information indicates a network slice list supported by each core network device in the at least one core network device.

**According to an eleventh aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device obtains a network slice list supported by each TA of at least one access network device managed by the gateway device; and sends fifth information to a second core network device, where the fifth information indicates a second network slice list, and the second network slice list includes identifiers of all network slices supported by each TA of the at least one access network device.

**According to a twelfth aspect,** an embodiment of this application provides a communication method. The method may be performed by a gateway device, or may be performed by a chip or a circuit disposed in the gateway device. This is not limited in this application. For ease of description, an example in which the method is performed by a gateway device is used for description below.

The method includes: The gateway device obtains a network slice list supported by each TA of at least one access network device managed by the gateway device, and sends sixth information to a second core network device, where the sixth information indicates a network slice list supported by each TA of each access network device in the at least one access network device.

**According to a thirteenth aspect,** an embodiment of this application provides a communication apparatus, including units configured to perform the steps in any one of the foregoing aspects.

**According to a fourteenth aspect,** an embodiment of this application provides a communication apparatus, including a processor. The processor is configured to perform the methods described in the foregoing aspects.

Optionally, the apparatus may further include a memory, configured to store instructions and data. The memory is coupled to the processor. When executing the instructions stored in the memory, the processor may implement the methods described in the foregoing aspects.

Optionally, the apparatus further includes an interface circuit. The interface circuit is configured to receive a signal from another communication apparatus and transmit the signal to the processor, or send a signal from the processor to another communication apparatus. The processor is configured to implement the methods described in the foregoing aspects by using a logic circuit or by executing code instructions.

**According to a fifteenth aspect,** an embodiment of this application provides a communication system, including: a gateway device configured to perform the method according to the first aspect, an access network device configured to perform the method according to the second aspect, and a core network device configured to indicate the method according to the third aspect; a gateway device configured to perform the method according to the fourth aspect and a core network device configured to indicate the method according to the fifth aspect; or a gateway device configured to indicate the method according to any one of the sixth aspect to the thirteenth aspect, and at least one of the following devices: an access network device, a core network device, or a terminal.

**According to a sixteenth aspect,** this application provides a computer-readable storage medium. The computer storage medium stores computer-readable instructions. When a computer reads and executes the computer-readable instructions, the computer is enabled to perform the method according to any possible design of any one of the first aspect to the third aspect.

**According to a seventeenth aspect,** this application provides a computer program product, where the computer program product includes computer program code. When a computer reads and executes the computer program code, the computer is enabled to perform the method according to any possible design of any one of the first aspect to the third aspect.

**According to an eighteenth aspect,** this application provides a chip. The chip is configured to read a computer program stored in a memory, to perform the method according to any possible design of any one of the first aspect to the third aspect.

For technical effects that can be achieved according to any one of the ninth aspect to the eighteenth aspect, refer to the technical effects that can be achieved in any possible design of any one of the first aspect to the eighth aspect. No repeated descriptions are provided.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a flowchart of a first communication method according to an embodiment of this application;
FIG. 4 is a flowchart of a second communication method according to an embodiment of this application;
FIG. 5 is a flowchart of a third communication method according to an embodiment of this application;
FIG. 6 is a flowchart of a fourth communication method according to an embodiment of this application;
FIG. 7 is a flowchart of a fifth communication method according to an embodiment of this application;
FIG. 8A and FIG. 8B are a flowchart of a sixth communication method according to an embodiment of this application;
FIG. 9 is a flowchart of a seventh communication method according to an embodiment of this application;
FIG. 10 is a flowchart of an eighth communication method according to an embodiment of this application;
FIG. 11 is a flowchart of a ninth communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes an architecture of a communication system to which methods provided in this application are applied.

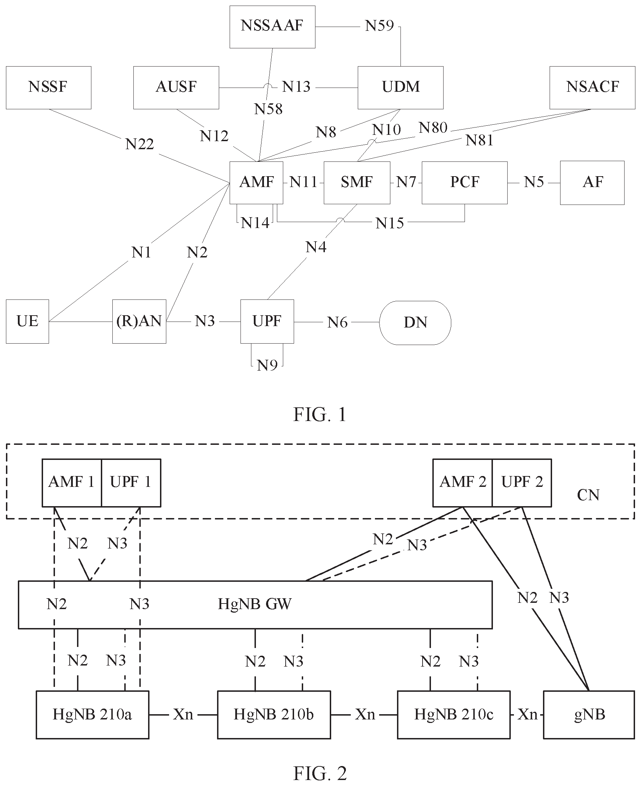

FIG. 1 is a diagram of an architecture of a communication system to which an embodiment of this application is applicable, and shows a 5G network architecture based on a service-based architecture. As shown in FIG. 1, the communication system may include three parts: a terminal part, an operator network part, and a data network (data network, DN). The following describes functions of a part of the network elements.

The terminal is a device that has a wireless transceiver function. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, automatic driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form used for the terminal are not limited in embodiments of this application.

The terminal may set up a connection to the operator network through an interface (for example, N1) provided by the operator network, and use services such as data and/or a voice provided by the operator network. The terminal may further access the DN through the operator network, and use an operator service deployed on the DN and/or a service provided by a third party. The third party may be a service party except the operator network and the terminal, and may provide a data service, a voice service, and/or the like for the terminal. A specific representation form of the third party may be specifically determined based on an actual application scenario, and is not limited herein.

The operator network may be a network deployed by an operator, and may include an access network device and a core network device. In a possible implementation method, the operator network further includes an application function (application function, AF) network element. Alternatively, the AF network element may not belong to the carrier network, but belongs to a third party.

The access network device may also be referred to as a radio access network (radio access network, RAN) node, a RAN entity, an access network (access network, AN) node, or the like, and forms a part of the communication system, to help the terminal implement radio access.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a home base station (for example, a home evolved NodeB (home evolved NodeB, HeNB), or a home next generation NodeB (home next generation NodeB, HgNB)), a next generation base station in a 6th generation (6th generation, 6G) mobile communication system, a base station in a future mobile communication system, an access point (access point, AP) in a wireless fidelity (wireless fidelity, Wi-Fi) system, or the like. The access network device may be a macro base station, a micro base station, an indoor base station, a relay node, or a host node, or may be a radio controller in a cloud RAN (cloud RAN, CRAN) scenario. Optionally, the access network device may alternatively be a server, a wearable device, a vehicle, a vehicle-mounted device, or the like. For example, an access network device in a V2X technology may be a roadside unit (roadside unit, RSU). All or a part of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or the part of the functions of the access network device.

In another possible scenario, a plurality of access network devices cooperate to assist the terminal in implementing the radio access, and different access network devices respectively implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open RAN, O-RAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any unit in the CU (or the CU-CP or the CU-UP), the DU, and the RU in this application may be implemented by using a software module, a hardware module, or a combination of the software module and the hardware module.

The terminal and the access network device may be at fixed locations, or may be movable. For example, the terminal and the access network device may be deployed on land, including an indoor or outdoor device, or a handheld or vehicle-mounted device; may be deployed on water; or may be deployed on an airplane, a balloon, and an artificial satellite. Application scenarios of the terminal and the access network device are not limited in embodiments of this application.

The core network device may include at least one of the following network elements: a mobility management network element, a user plane function network element, a session management network element (for example, a session management function (session management function, SMF) network element), a data management network element (for example, a unified data management (unified data management, UDM) network element), a policy control network element (for example, a policy control function (policy control function, PCF) network element), a network slice selection network element (for example, a network slice selection function (network slice selection function, NSSF) network element), a network slice-specific authentication and authorization network element (for example, a network slice-specific authentication and authorization function (network slice-specific authentication and authorization function, NSSAAF) network element), a network slice admission control network element (for example, a network slice admission control function (network slice admission control function, NSACF) network element), or the like. The following separately describes a part of the network elements.

In this application, the mobility management network element is a control plane network element provided by an operator network, and is responsible for access control and mobility management when the terminal device accesses the operator network, for example, including functions such as mobility status management, temporary user identity assignment, and user authentication and authorization. In 5G, the mobility management network element may be an AMF network element. In future communication such as 6th generation (the 6th generation, 6G), the mobility management network element may still be an AMF network element, or may have another name. This is not limited in this application.

In this application, the user plane function network element is a gateway provided by an operator, and is a gateway for communication between the operator network and the DN. Functions of the user plane function network element include data packet routing and transmission, packet detection, service usage reporting, quality of service (quality of service, QoS) processing, lawful interception, uplink packet detection, downlink packet storage, and the like. In 5G, the user plane function network element may be a UPF network element. In future communication such as 6G, the user plane function network element may still be a UPF network element, or a network element having another name but having all or a part of functions of the user plane function network element. This is not limited in this application.

In embodiments of this application, a communication apparatus configured to implement a function of an access network device, a terminal, or a core network device may be an access network device, a terminal, or a core network device, or may be an apparatus that can support the access network device, the terminal, or the core network device in implementing the function, for example, a chip system. The apparatus may be installed in the access network device, the terminal, or the core network device. In the technical solutions provided in embodiments of this application, an example in which the apparatus configured to implement the function of the access network device is an access network device, the apparatus configured to implement the function of the terminal is a terminal, and the apparatus configured to implement the function of the core network device is a core network device is used to describe the technical solutions provided in embodiments of this application.

The DN is a network located outside the operator network. A plurality of DNs can access the operator network, and a plurality of services can be deployed on the DN, to provide services including data and/or voice and the like for a terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the terminal, and the mobile phone or the computer of the employee can access information, a data resource, or the like on the internal office network of the company.

FIG. 2 is a diagram of an architecture of another communication system to which an embodiment of this application is applicable. The communication system may include an access network device, a gateway device, and a core network device. For example, the access network device may include a home base station (for example, an HgNB 210a to an HgNB 210c in FIG. 2), the gateway device may include a home base station gateway (for example, an HgNB gateway (HgNB gateway, HgNB GW) in FIG. 2), and the core network device may include a mobility management network element and a user plane function network element. Optionally, the access network device further includes a macro base station (for example, a gNB in FIG. 2). For specific content of the home base station and the macro base station, refer to the descriptions of the access network device in FIG. 1, and for specific content of the core network device, refer to the descriptions of the core network device in FIG. 1 Repeated content is not described again.

The home base station gateway may manage the home base station. In some possible implementations, the home base station gateway may manage transmission of control plane signaling between the home base station and the core network device (for example, an AMF). For example, an N2 interface (which may also be referred to as an NG interface) exists between the home base station gateway and each of the home base station and the AMF. The home base station gateway may transmit control plane signaling (for example, next generation application protocol (next generation application protocol, NGAP) signaling) between the home base station and the AMF through the N2 interface. In some other possible implementations, the home base station gateway may manage transmission of data plane information between the home base station and the core network device (for example, a UPF). For example, an N3 interface exists between the home base station gateway and each of the home base station and the UPF, and the home base station gateway may transmit data plane information between the home base station and the UPF through the N3 interface.

In embodiments of this application, a communication apparatus configured to implement a function of the gateway device may be a gateway device itself, or may be an apparatus that can support the gateway device in implementing the function, for example, a chip system. The apparatus may be mounted in the gateway device. In the technical solutions provided in embodiments of this application, an example in which the apparatus configured to implement the function of the gateway device is a gateway device is used to describe the technical solutions provided in embodiments of this application.

N1, N2, N3, N4, N6, and the like in FIG. 1, and N2, N3, Xn, and the like in FIG. 2 are interfaces. For meanings of the interfaces, refer to meanings defined in a 3rd generation partnership project (3rd generation partnership project, 3GPP) standard protocol. This is not limited herein.

It should be noted that the communication systems shown in FIG. 1 and FIG. 2 do not constitute a limitation on the communication system to which embodiments of this application are applicable. Therefore, the communication method provided in embodiments of this application is further applicable to communication systems of various standards, for example, a long term evolution (long term evolution, LTE) communication system, a 5G communication system, a 6G communication system, a future communication system, V2X, long term evolution-internet of vehicles (LTE-vehicle, LTE-V), vehicle to vehicle (vehicle to vehicle, V2V), internet of vehicles, MTC, internet of things (internet of things, IoT), and long term evolution-machine to machine (LTE-machine to machine, LTE-M), machine to machine (machine to machine, M2M), internet of things, and the like. In addition, the communication system provided in this application may be used in a terrestrial network (terrestrial network, TN) and/or a non-terrestrial network (non-terrestrial network, NTN). This is not limited. In addition, it should be further noted that names of network elements in the communication system are not limited in embodiments of this application. For example, in communication systems of different standards, the network elements may have other names. For another example, when a plurality of network elements are integrated into a same physical device, the physical device may alternatively have another name.

For ease of understanding of this application, the following describes terms in this application.
(1) **TA** is a concept specified for location management of a terminal. Both the terminal and a core network device can learn of the TA of the terminal. TA is configured at a cell level. A same TA may be configured for a plurality of cells, and one cell corresponds to only one TA. Each TA may be indicated by a tracking area code (tracking area code, TAC) or a tracking area identity (tracking area identity, TAI).
(2) **Network slice, also referred to as a slice (slice):** A physical network may be abstracted into a plurality of network slices. Each network slice forms an end-to-end logical subnet, and different network slices are logically isolated from each other. Each network slice may flexibly provide one or more network services as required, without affecting other network slices.

Different logical subnets are identified and distinguished by using single network slice selection assistance information (single network slice selection assistance information, S-NSSAI). Each piece of S-NSSAI may include at least one of the following: a network slice/service type (slice/service type, SST), and a network slice differentiator (slice differentiator, SD). Specifically, SST may indicate a specific feature and service type specific to a network slice. SDs, as a supplement to SST, may further be used to distinguish between a plurality of network slice instances that satisfy a same SST. SD is optional.

In this application, S-NSSAI may indicate a network slice. For example, an identifier of a network slice may be S-NSSAI of the network slice. The NSSAI may include one or more pieces of S-NSSAIs. In other words, NSSAI includes an identifier of one or more network slices, and may indicate the one or more network slices.

In an implementation, a type of the NSSAI may include at least one of the following ① to ④:
① Requested NSSAI (Requested NSSAI): It may include S-NSSAI of a network slice requested by the terminal. For example, if the requested NSSAI includes S-NSSAI of a network slice #1 and S-NSSAI of a network slice #2, network slices requested by the terminal are the network slice #1 and the network slice #2. In an implementation, the requested NSSAI may be carried in a registration request (registration request).
② Allowed NSSAI (Allowed NSSAI): It may include S-NSSAI of a network slice allowed by a network side in a network slice requested by the terminal. In an implementation, the allowed NSSAI may be indicated by using an allowed NSSAI information element in registration accept (registration accept).
③ Rejected NSSAI (Rejected NSSAI): It may include S-NSSAI of a network slice rejected by a network side in a network slice requested by the terminal device. The rejected NSSAI may include a network slice that is rejected to be used in all areas in a registration area (registration area, RA). For example, if the rejected NSSAI includes an identifier of a network slice #1, and the RA includes a TA identified by a TAC #1, a network slice that is rejected to be used in the TA identified by the TAC #1 is the network slice #1.
④ Target NSSAI (Target NSSAI): It is NSSAI provided by a serving public land mobile network (public land mobile network, PLMN) for an access network device. The access network device may attempt to steer a terminal to a cell that supports a network slice identified by S-NSSAI in the target NSSAI.

(3) Session is a connection among a terminal, an access network device, a user plane function network element, and a DN that is established by a session management network element in a mobile communication system for the terminal, and is for transmitting user plane data between the terminal and the DN. The session is, for example, a packet data unit (packet data unit, PDU) session.

(4) Termination modes for a radio resource control (radio resource control, RRC) connection and NAS signaling of a terminal

In this application, the termination modes for the RRC connection and the NAS signaling may include a termination mode 1 and a termination mode 2.

Termination mode 1: An RRC connection of a terminal may be terminated at an access network device. In this way, the access network device may parse RRC signaling from the terminal. Control plane signaling (for example, NGAP signaling) related to the terminal may be relayed to a corresponding core network device or a corresponding access network device via a gateway device. In other words, NAS signaling of the terminal is terminated at an AMF. In this way, the AMF may parse the NAS signaling from the terminal. In some possible implementations, the gateway device may further assign a terminal identifier to the terminal, for example, a UE NGAP identity (UE NGAP identity, UE NGAP ID). In some examples, the terminal identifier assigned by the gateway device may be relayed to a peer end together with the terminal identifier (for example, the UE NGAP ID) assigned by the core network device or the access network device to the terminal.

Termination mode 2: An RRC connection of a terminal may be terminated at a gateway device. In this way, the gateway device may parse RRC signaling from the terminal. The control plane signaling (such as NGAP signaling) related to the terminal may be terminated at the gateway device. That is, NAS signaling of the terminal may be terminated at the gateway device. In this way, the gateway device may parse the NAS signaling from the terminal. In some possible implementations, the gateway device may assign a terminal identifier to the terminal, for example, a UE NGAP ID. In some examples, there may be a correspondence between a terminal identifier re-assigned by the gateway device to the terminal and a terminal identifier (for example, a UE NGAP ID) assigned by a core network device and/or an access network device to the terminal. The gateway device may store the correspondence. In this way, the gateway device may communicate with the core network device and/or the access network device by using the re-assigned terminal identifier. For example, the gateway device forwards, based on the correspondence, terminal-related control plane signaling from the core network device and/or the access network device, or the gateway device forwards, based on the correspondence, terminal-related control plane signaling from the core network device and/or the access network device as a container (for example, an NGAP-Container).

In the following descriptions of this application, "sending information to a device (for example, a terminal)" may be understood as that a destination end of the information is the device, and may include directly or indirectly sending the information to the device. "Receiving information from a device (for example, a terminal)" or "receiving information that is from a device (for example, a terminal)" may be understood as that a source end of the information is the device, and may include directly or indirectly receiving the information from the device. Information may undergo necessary processing, for example, a format change, between the source end and the destination end of information sending. However, the destination end may understand valid information from the source end. A similar expression in this application may be understood similarly, and details are not described herein again.

In embodiments of this application, "when...", "in the case of...", and "if...," may represent a same meaning, and may be replaced with each other.

Currently, an access network device interacts with a terminal and a core network device to provide a service of a network slice for the terminal. For example, when initially accessing a network, the terminal may send an RRC setup complete (RRCSetupComplete) message to the access network device, where the RRC setup complete message includes requested NSSAI, to initiate a registration request for a network slice indicated by the requested NSSAI. After the access network device transparently transmits the requested NSSAI to the core network device, the core network device may determine, based on subscription information of the terminal, whether a network side (including a RAN side and a core network side) can provide, for the terminal, a service of the network slice indicated by the requested NSSAI. If the network side can support a part of or all network slices indicated by the requested NSSAI, the core network device may send a registration accept message to the terminal, where the registration accept message includes allowed NSSAI, and the allowed NSSAI includes S-NSSAI of one or more network slices in the part of or all network slices. Optionally, the core network device may send the registration accept message to the terminal via the access network device.

In addition, currently, the access network device may perform mobility management on the terminal based on a network slice. For example, when the terminal needs to be handed over, a source access network device (for example, a source gNB or an SgNB) may send an identifier of an established PDU session and an identifier of a network slice associated with the PDU session to a target access network device (a target gNB or a TgNB). Then, the target access network device may determine, depending on whether the target access network device supports a network slice, whether to accept admission of the PDU session. For example, if the target access network device does not support the network slice associated with the PDU session, the target access network device rejects admission of the PDU session.

When a communication system includes a gateway device, how the gateway device supports a network slice needs to be further studied, for example, how the gateway device determines, based on requested NSSAI, a core network device that provides a service of a network slice for a terminal; for another example, how the gateway device transmits data plane information between an access network device and a core network device for a service of a network slice; and for another example, how the gateway device performs mobility management on a terminal based on a network slice.

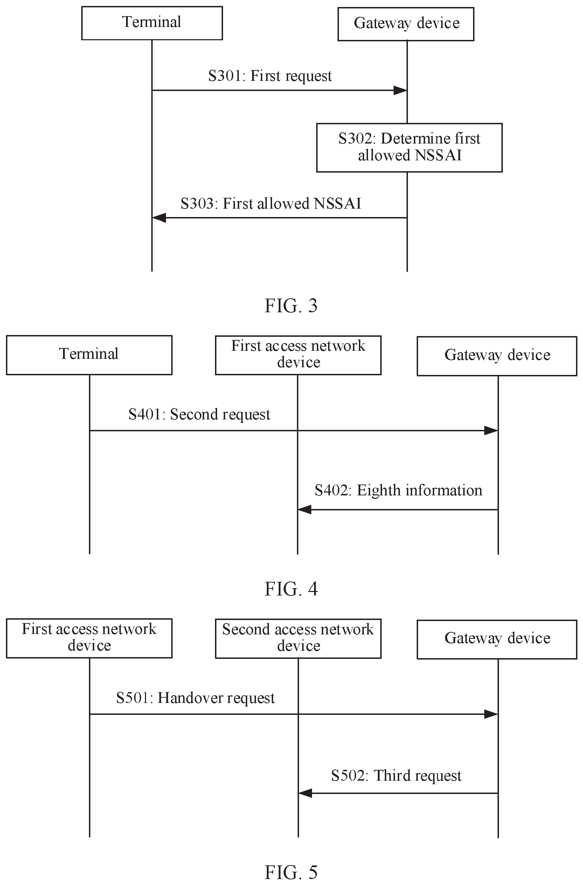

In view of this, embodiments of this application provide a communication method. FIG. 3 is a schematic flowchart corresponding to a communication method according to an embodiment of this application. An access network device is, for example, a home base station, a gateway device may be an access network gateway device, for example, a home base station gateway, and a core network device is, for example, an AMF. As shown in FIG. 3, the method includes the following steps.

**S301:** A terminal sends a first request to the gateway device, and correspondingly, the gateway device receives the first request from the terminal.

The first request may be for requesting to provide services of M network slices for the terminal, and M is a positive integer greater than or equal to 2. For example, the first request may include requested NSSAI, and the requested NSSAI includes identifiers of the M network slices, to request to provide the services of the M network slices for the terminal. For example, the requested NSSAI in the first request includes S-NSSAI of a network slice 1 to a network slice 4. The first request is for requesting to provide services of the network slice 1 to the network slice 4 for the terminal.

In some implementations, the terminal may send the first request to the gateway device via an access network device managed by the gateway. Specifically, after the terminal sends the first request to the access network device, the access network device forwards the first request from the terminal to the gateway device. For example, the first request is a registration request (registration request) message. The terminal accesses a cell of the access network device, and may transparently transmit the registration request to the access network device by using an RRC setup complete message. The registration request is for requesting to provide the services of the M network slices for the terminal. Then, the access network device may forward the registration request to the gateway device.

**S302:** The gateway device determines first allowed NSSAI.

The first allowed NSSAI includes identifiers of N network slices in the M network slices, and N is a positive integer greater than or equal to 2 and less than or equal to M. The N network slices include a network slice allowed by different core network devices to provide a service for the terminal. The different core network devices may include at least two core network devices. The following uses an example in which the different core network devices include two core network devices for description. For example, the N network slices include a network slice 1 and a network slice 2. The network slice 1 is a network slice that is allowed by a core network device 1 to provide a service for the terminal, the network slice 2 is a network slice that is allowed by a core network device 2 to provide a service for the terminal, and the core network device 1 and the core network device 2 are different slices. Optionally, the different core network devices may be different AMFs.

The following describes the first allowed NSSAI by using examples.

For example, the M network slices are a network slice 1 to a network slice 4. In other words, the first request is for requesting to provide services of the network slice 1 to the network slice 4 for the terminal. AMFs connected to the gateway device include an AMF 1 and an AMF 2. The network slice 1 is a network slice that the AMF 1 to provide a service for the terminal, and the network slice 2 is a network slice that is allowed by the AMF 2 to provide a service for the terminal. The N network slices are the network slice 1 and the network slice 2. The first allowed NSSAI includes S-NSSAI of the network slice 1 and the network slice 2.

For another example, the M network slices are a network slice 1 to a network slice 4. AMFs connected to the gateway device include an AMF 1 and an AMF 2. The network slice 1, the network slice 3, and the network slice 4 are network slices that are allowed by the AMF 1 to provide services for the terminal, and the network slice 2 is a network slice that is allowed by the AMF 2 to provide a service for the terminal. The N network slices are the network slice 1 to the network slice 4. The first allowed NSSAI includes S-NSSAI of the network slice 1 to the network slice 4.

Specific content of determining the first allowed NSSAI by the gateway device is specifically described in the following manner a1 and manner a2. Details are not described herein.

**S303:** The gateway device sends the first allowed NSSAI to the terminal, and correspondingly, the terminal receives the first allowed NSSAI from the gateway device.

In some possible implementations, the gateway device may send the first allowed NSSAI to the terminal via the access network device. Specifically, after the gateway device sends the first allowed NSSAI to the access network device, the access network device forwards the first allowed NSSAI to the terminal. The first allowed NSSAI may be carried in a conventional message (for example, carried in a registration accept (registration accept) message carried in an initial context setup request (initial context setup request) message), or may be carried in a new message. This is not limited in this application.

According to the method shown in FIG. 3, after the terminal requests the gateway device to provide the services of the M network slices for the terminal, the gateway device may determine the first allowed NSSAI, where the first allowed NSSAI includes the identifiers of the N network slices in the M network slices. In this way, the gateway device may support network slicing.

In addition, in the method, the N network slices include a network slice allowed by different core network devices (for example, different AMFs) to provide a service for the terminal. Currently, after the terminal accesses the access network device, the access network device can communicate with only one AMF, and cannot quickly obtain the first allowed NSSAI including the identifiers of the N network slices. In the method shown in FIG. 3, because the gateway device may communicate with a plurality of core network devices (for example, a plurality of AMFs), when the gateway device supports a termination mode 2, the gateway device can quickly determine the first allowed NSSAI including the identifiers of the N network slices, so that a success rate and efficiency of requesting a service of a network slice by the terminal can be improved, service continuity of the network slice can be ensured, and resource utilization of a core network device can be improved.

As described above, the gateway device may determine the first allowed NSSAI in a plurality of manners, for example, a manner a1 or a manner a2.

### Manner a1:

The manner a1 may include steps A1 to A3.

**Step A1:** The gateway device requests first information from at least one core network device (for example, at least one AMF). The first information is for determining the first allowed NSSAI.

For example, for each of the M network slices, the gateway device may request the first information from each core network device in the at least one core network device. For example, the M network slices include a network slice 1 and a network slice 2. The at least one core network device includes a first core network device and a third core network device. The first core network device supports the network slice 1, and the third core network device supports the network slice 2. The gateway device requests first information 1 from the first core network device, and the gateway device requests first information 2 from the third core network device. The first information 1 and the first information 2 are for determining the first allowed NSSAI.

Optionally, if at least two of the M network slices are supported by a same core network device, for the at least two network slices, the gateway device requests the first information from the core network device once, so that signaling overheads can be reduced, and transmission resources can be saved. For example, the M network slices include a network slice 3 and a network slice 4. A fifth core network device supports the network slice 3 and the network slice 4. The gateway device requests first information 3 from the fifth core network device, where the first information 3 is for determining the first allowed NSSAI.

**Step A2:** The gateway device receives at least one piece of first information.

For example, each core network device in the at least one core network device may send one piece of first information to the gateway device. Correspondingly, the gateway device may receive the at least one piece of first information. For example, the at least one core network device includes a first core network device and a third core network device. The first core network device may send first information 1 to the gateway device, and the third core network device may send first information 2 to the gateway device. Correspondingly, the gateway device may receive the first information 1 and the first information 2.

**Step A3:** The gateway device determines the first allowed NSSAI based on the at least one piece of first information.

Optionally, in the manner a1, the first information may include at least one of the following 1 to 3:
1. First subscription information of the terminal, where the first subscription information indicates a network slice that the terminal subscribes to. Optionally, the first subscription information may include an identifier of the network slice that the terminal subscribes to. For example, the first subscription information includes an identifier of a network slice 1, indicating that the network slice that the terminal subscribes to includes the network slice 1. For example, in the first information fed back by each core network device in the at least one core network device, the first subscription information of the terminal is subscription information obtained by the core network device.
2. Information (briefly referred to as information #1) indicating whether the terminal subscribes to P network slices in the M network slices, where P is a positive integer less than or equal to M. In some examples, the information #1 may be a Boolean value indicating whether the terminal subscribes to the P network slices in the M network slices. In some other examples, the information #1 may include an identifier of a network slice that the terminal subscribes to. For example, if the first core network device determines that the terminal has subscribed to the P network slices in the M network slices, the information #1 fed back by the first core network device may include identifiers of the P network slices. For example, in the first information fed back by each core network device in the at least one core network device, the information #1 is determined by the core network device.
3. At least one piece of second allowed NSSAI, where the at least one piece of second allowed NSSAI includes identifiers of Q network slices in the M network slices, Q is a positive integer less than or equal to M, and the Q network slices are network slices that are allowed by one of the at least one core network device to provide services for the terminal. For example, in the first information fed back by each core network device in the at least one core network device, the second allowed NSSAI is allowed NSSAI determined by the core network device for the terminal. For example, if a first core network device determines that second allowed NSSAI 1 includes an identifier of a network slice 1, the first information fed back by the first core network device may include the second allowed NSSAI 1.

Corresponding to different content of the first information, steps A1 to A3 may have different manners, for example, a manner b1, a manner b2, or a manner b3. The following separately describes the manner b1, the manner b2, and the manner b3 by using an example in which the at least one core network device includes a first core network device and a third core network device, the M network slices include a network slice 1 and a network slice 2, the first core network device supports the network slice 1, and the third core network device supports the network slice 2.

### Manner b1:

In the manner b1, the first information includes the first subscription information of the terminal. The following describes steps A1 to A3 in the manner b1.

In step A1, the gateway device requests first subscription information 1 of the terminal from the first core network device. The first subscription information 1 is subscription information of the terminal obtained by the first core network device. Optionally, the gateway device may request the first subscription information 1 by sending a message a1 to the first core network device. The message a1 may include a first identifier of the terminal. The first identifier may uniquely identify the terminal in a core network. For example, the first identifier may be at least one of the following: a UE NGAP ID assigned by a core network device (for example, the first core network device) to the terminal, a 5G globally unique temporary identifier (5G globally unique temporary identifier, 5G-GUTI), a subscription permanent identifier (subscription permanent identifier, SUPI), a subscription concealed identifier (Subscription Concealed Identifier, SUCI), a permanent equipment identifier (permanent equipment identifier, PEI), and the like. After receiving the message a1, the first core network device may obtain the first subscription information 1 of the terminal based on the first identifier. For example, the first core network device may obtain, based on the first identifier, the first subscription information 1 from a unified data management (unified data management, UDM) connected to the first core network device.

In step A1, the gateway device may further request first subscription information 2 of the terminal from the third core network device, where the first subscription information 2 is subscription information of the terminal obtained by the third core network device. For specific content of requesting, by the gateway device, the first subscription information 2 of the terminal from the third core network device, refer to the descriptions of requesting, by the gateway device, the first subscription information 1 of the terminal from the first core network device. The only differences are that the first core network device is replaced with the third core network device, and the first subscription information 1 is replaced with the first subscription information 2. Details are not described herein again.

This application does not limit an execution sequence of requesting, by the gateway device, the first subscription information 1 of the terminal from the first core network device and requesting, by the gateway device, the first subscription information 2 of the terminal from the third core network device.

In step A2, the first core network device sends the first subscription information 1 to the gateway device, and the third core network device sends the first subscription information 2 to the gateway device. Correspondingly, the gateway device receives the first subscription information 1 and the first subscription information 2. The first subscription information 1 and the first subscription information 2 may be carried in a conventional message, or may be carried in a new message. An execution sequence of receiving the first subscription information 1 and receiving the first subscription information 2 by the gateway device is not limited in this application.

In step A3, the gateway device determines the first allowed NSSAI based on the first subscription information 1 and the first subscription information 2. In some implementations, the gateway device may determine the first allowed NSSAI based on the following information: the first subscription information 1, the first subscription information 2, the identifiers of M network slices, a network slice list (slice list) supported by the access network device, and a network slice list supported by the core network device. Optionally, the first allowed NSSAI is obtained by obtaining an intersection set of the requested NSSAI (including the identifiers of the M network slices), the network slice that the terminal subscribes to, the network slice list supported by the core network device, and a network slice list supported by a TA in which the terminal is located. The network slice that the terminal subscribes to includes a network slice that the terminal subscribes to and that is indicated by the first subscription information 1 and a network slice that the terminal subscribes to and that is indicated by the first subscription information 2. The network slice list supported by the TA in which the terminal is located may be obtained based on the network slice list supported by the access network device. For example, a network slice a is any one of the M network slices. If the first subscription information 1 or the first subscription information 2 includes an identifier of the network slice a, and the network slice list supported by the access network device includes the identifier of the network slice a, the first allowed NSSAI includes the identifier of the network slice a. For example, the identifiers of the M network slices include identifiers of a network slice 1 and a network slice 2. If the first subscription information 1 includes the identifier of the network slice 1, the first subscription information 2 includes the identifier of the network slice 2, and the network slice list supported by the access network device includes the identifiers of the network slice 1 and the network slice 2, the gateway device may determine that the first allowed NSSAI includes the identifiers of the network slice 1 and the network slice 2.

In some possible implementations, the gateway device may request first subscription information from all core network devices connected to the gateway device, to obtain at least one piece of first subscription information. That is, the at least one core network device may be all the core network devices connected to the gateway device. In this case, the first allowed NSSAI is obtained by obtaining an intersection set of the requested NSSAI, a network slice that the terminal subscribes to and that is indicated by the at least one piece of first subscription information, the network slice list supported by the core network device, and the network slice list supported by the TA in which the terminal is located.

In some other possible implementations, before step A1, the gateway device may determine the at least one core network device. There are a plurality of determining manners, for example, a manner c1 or a manner c2.

**Manner c1:** After determining the at least one core network device, the access network device sends indication information of the at least one core network device to the gateway device.

The manner c1 may include steps B1 and B2.

**Step B1:** The access network device determines the at least one core network device.

In some possible implementations, the access network device may be a serving access network device of the terminal. After receiving the first request from the terminal, the access network device may obtain the identifiers of the M network slices in the first request, and determine the at least one core network device based on the identifiers of the M network slices and a network slice list supported by the at least one core network device. For example, the identifiers of the M network slices include identifiers of a network slice 1 and a network slice 2. A network slice list supported by an AMF 1 includes the identifier of the network slice 1 and an identifier of a network slice 3, and a network slice list supported by an AMF 2 includes the identifier of the network slice 2. In this case, the access network device may determine that the at least one core network device includes the AMF 1 and the AMF 2.

Optionally, a network slice a is any one of the M network slices. If a plurality of core network devices all support the network slice a, the access network device may select one core network device from the plurality of core network devices as a device in the at least one core network device. There may be a plurality of selection bases, and the following uses an example for description.

In some examples, the access network device may randomly select one core network device from the plurality of core network devices as the device in the at least one core network device. For example, the M network slices include a network slice 1. Both an AMF 1 and an AMF 3 support the network slice 1. The access network device may randomly select one AMF from the AMF 1 and the AMF 3, for example, randomly select the AMF 1. The at least one core network device may include the AMF 1.

In some other examples, the access network device may select a serving core network device of the terminal from the plurality of core network devices as the device in the at least one core network device. For example, the M network slices include a network slice 1. Both an AMF 1 and an AMF 3 support the network slice 1. The AMF 1 is a serving AMF of the terminal. In this case, the access network device may determine that the at least one core network device includes the AMF 1.

In still some other examples, the access network device may select, from the plurality of core network devices, a core network device whose network slice resources are not congested, as the device in the at least one core network device. For example, if both an AMF 1 and an AMF 3 support a network slice 1, but the access network device receives a congestion notification of the network slice 1 that is sent by the AMF 1, the access network device may determine that the at least one core network device includes the AMF 3.

In still some other examples, the access network device may select, from the plurality of core network devices, a core network device that supports a largest quantity of network slices in the M network slices, as the device in the at least one core network device. For example, the M network slices include a network slice 1 and a network slice 2. An AMF 1 supports the network slice 1 and the network slice 2, and an AMF 2 supports the network slice 2. The AMF 1 supports two of the M network slices, and the AMF 2 supports one of the M network slices. The AMF 1 supports a largest quantity of network slices in the M network slices. In this case, the access network device determines that the at least one core network device includes the AMF 1. In this example, a quantity of the at least one core network device may be reduced, so that signaling overheads of requesting the first information from the at least one core network device by the gateway device can be reduced, and transmission resources can be saved.

**Step B2:** The access network device sends the indication information of the at least one core network device to the gateway device. Correspondingly, the gateway device receives the indication information of the at least one core network device from the access network device. Then, the gateway device may determine the at least one core network device based on the indication information of the at least one core network device.

The indication information of the at least one core network device may include an identifier or an IP address of the at least one core network device. For example, the indication information of the at least one core network device includes identifiers of an AMF 1 and an AMF 2. In this case, the gateway device may determine that the at least one core network device is the AMF 1 and the AMF 2. An identifier of an AMF is, for example, a globally unique AMF identifier (globally unique AMF identifier, GUAMI). Therefore, the identifiers of the AMF 1 and the AMF 2 are, for example, GUAMIs of the AMF 1 and the AMF 2.

An execution sequence of receiving the first request and the indication information of the at least one core network device by the gateway device is not limited in this application. The first request and the indication information of the at least one core network device may be carried in a same message, or may be carried in different messages.

In the manner c1, the gateway device can quickly and accurately determine the at least one core network device based on the indication information of the at least one core network device from the access network device.

### Manner c2:

The gateway device determines the at least one core network device based on the identifiers of the M network slices and a network slice list supported by the at least one core network device. For specific content, refer to the descriptions of "the access network device determines the at least one core network device based on the identifiers of the M network slices and the network slice list supported by the at least one core network device" in step B1. The only difference is that the access network device is replaced with the gateway device. Details are not described herein again.

In the manner c2, the gateway device may determine the at least one core network device by itself, and the access network device does not need to determine the at least one core network device. Therefore, power consumption of the access network device can be reduced, and signaling overheads between the access network device and the gateway device can be reduced.

In the manner b1, the gateway device can quickly and accurately determine the first allowed NSSAI based on the first subscription information of the terminal. In addition, in the method, the at least one core network device needs to send only the first subscription information to the gateway device, and the at least one core network device does not need to determine the first allowed NSSAI. Therefore, compute resources of the at least one core network device can be saved, and power consumption of the at least one core network device can be reduced.

### Manner b2:

In the manner b2, the first information includes the information #1, for example, indication information 1 or indication information 2 described below. The following describes steps A1 to A3 in the manner b2.

In step A1, the gateway device requests the indication information 1 of the terminal from the first core network device, where the indication information 1 indicates whether the terminal subscribes to the network slice 1 in the M network slices. For example, if a value of the indication information 1 is a first value (for example, 0 or 1), it indicates that the terminal has subscribed to the network slice 1; or if a value of the indication information 1 is a second value (for example, 1 or 0), it indicates that the terminal has not subscribed to the network slice 1.

Optionally, the gateway device may request the indication information 1 by sending a message b1 to the first core network device. The message b1 includes a first identifier of the terminal and an identifier of the network slice 1. For specific content of the first identifier, refer to the manner b1. Details are not described herein again. After receiving the message b1, the first core network device may determine the indication information 1 based on the first identifier and the identifier of the network slice 1. For example, the first core network device may obtain first subscription information 1 of the terminal based on the first identifier. For specific obtained content, refer to the manner b1. Details are not described herein again. Then, the first core network device may determine the indication information 1 based on the first subscription information 1 and the identifier of the network slice 1. For example, if the first subscription information 1 includes the identifier of the network slice 1, the first core network device may determine that the indication information 1 indicates that the terminal has subscribed to the network slice 1, to determine the indication information 1, for example, determine that the value of the indication information 1 is the first value.

In step A1, the gateway device may further request the indication information 2 of the terminal from the third core network device, where the indication information 2 indicates whether the terminal subscribes to the network slice 2 in the M network slices. For specific content of requesting, by the gateway device, the indication information 2 of the terminal from the third core network device, refer to the descriptions of requesting, by the gateway device, the indication information 1 of the terminal from the first core network device. The only differences are that the first core network device is replaced with the third core network device, the indication information 1 is replaced with the indication information 2, the first subscription information 1 is replaced with the first subscription information 2, and the network slice 1 is replaced with the network slice 2. Details are not described herein again.

This application does not limit an execution sequence of requesting, by the gateway device, the indication information 1 of the terminal from the first core network device and requesting, by the gateway device, the indication information 2 of the terminal from the third core network device.

In step A2, the first core network device sends the indication information 1 to the gateway device, and the third core network device sends the indication information 2 to the gateway device. Correspondingly, the gateway device receives the indication information 1 and the indication information 2. The indication information 1 and the indication information 2 may be carried in a conventional message, or may be carried in a new message. An execution sequence of receiving the indication information 1 and receiving the indication information 2 by the gateway device is not limited in this application.

In step A3, the gateway device determines the first allowed NSSAI based on the indication information 1 and the indication information 2. In some implementations, the gateway device may determine the first allowed NSSAI based on the following information: the indication information 1, the indication information 2, the identifiers of the M network slices, and a network slice list supported by the access network device. Optionally, the first allowed NSSAI is obtained by obtaining an intersection set of the requested NSSAI (including the identifiers of the M network slices), the network slice that the terminal subscribes to, the network slice list supported by the core network device, and a network slice list supported by a TA in which the terminal is located. The network slice that the terminal subscribes to includes a network slice that the terminal subscribes to and that is indicated by the indication information 1 and a network slice that the terminal subscribes to and that is indicated by the indication information 2. The network slice list supported by the TA in which the terminal is located may be obtained based on the network slice list supported by the access network device. For example, a network slice a is any one of the M network slices. If the indication information 1 or the indication information 2 indicates that the terminal has subscribed to the network slice a, and the network slice list supported by the access network device includes an identifier of the network slice a, the first allowed NSSAI includes the identifier of the network slice a. For example, the identifiers of the M network slices include identifiers of a network slice 1 and a network slice 2. If the indication information 1 indicates that the terminal has subscribed to the network slice 1, the indication information 2 indicates that the terminal has subscribed to the network slice 2, and the network slice list supported by the access network device includes the identifiers of the network slice 1 and the network slice 2, the gateway device may determine that the first allowed NSSAI includes the identifiers of the network slice 1 and the network slice 2.

In some possible implementations, the gateway device may request the information #1 from all core network devices connected to the gateway device. That is, the at least one core network device may be all the core network devices connected to the gateway device. In this case, a message that is sent by the gateway device to each core network device and that is for requesting the information #1 includes the first identifier of the terminal and the identifiers of the M network slices. For example, the message b1 sent by the gateway device to the first core network device includes the first identifier of the terminal and the identifiers of the M network slices. Then, the first core network device may determine the information #1 based on the first identifier of the terminal and the identifiers of the M network slices.

In some other possible implementations, before step A1, the gateway device may determine the at least one core network device. For a determining manner, refer to the foregoing manner c1 or manner c2. Details are not described herein again.

In this manner, the gateway device can quickly and accurately determine the first allowed NSSAI based on the information indicating whether the terminal subscribes to the P network slices in the M network slices. In addition, in the method, the at least one core network device needs to send, to the gateway device, only the information indicating whether the terminal subscribes to the P network slices in the M network slices, so that signaling overheads can be reduced, and the at least one core network device does not need to determine the first allowed NSSAI. Therefore, compute resources of the at least one core network device can be saved, and power consumption of the at least one core network device can be reduced.

### Manner b3:

In the manner b3, the first information includes the at least one piece of second allowed NSSAI. The following describes steps A1 to A3 in the manner b3.

In step A1, the gateway device requests second allowed NSSAI 1 of the terminal from the first core network device, where the second allowed NSSAI 1 is allowed NSSAI determined by the first core network device for the terminal. Optionally, the gateway device may request the second allowed NSSAI 1 by sending a message c1 to the first core network device. The message c1 includes a first identifier of the terminal and an identifier of the network slice 1. For specific content of the first identifier, refer to the manner b1. Details are not described herein again.

After receiving the message c1, the first core network device may determine the second allowed NSSAI 1. For example, the first core network device may obtain first subscription information 1 of the terminal based on the first identifier. For specific obtained content, refer to the manner b1. Details are not described herein again. Then, the first core network device may determine the second allowed NSSAI 1 based on the first subscription information 1, the identifier of the network slice 1, a network slice list supported by the first core network device, and a network slice list supported by the access network device. Optionally, the second allowed NSSAI 1 is obtained by obtaining an intersection set of a requested network slice, a network slice that the terminal subscribes to and that is indicated by the first subscription information 1, a network slice list supported by the core network device, and a network slice list supported by a TA in which the terminal is located. The network slice list supported by the TA in which the terminal is located may be obtained based on the network slice list supported by the access network device. For example, if the first subscription information 1, the network slice list supported by the access network device, and the network slice list supported by the first core network device all include the network slice 1, the first core network device may determine that the second allowed NSSAI 1 includes the identifier of the network slice 1.

In step A1, the gateway device may further request second allowed NSSAI 2 of the terminal from the third core network device, where the second allowed NSSAI 2 is allowed NSSAI determined by the third core network device for the terminal. For specific content of requesting, by the gateway device, the second allowed NSSAI 2 of the terminal from the third core network device, refer to the descriptions of requesting, by the gateway device, the second allowed NSSAI 1 of the terminal from the first core network device. The only differences are that the first core network device is replaced with the third core network device, the second allowed NSSAI 1 is replaced with the second allowed NSSAI 2, the first subscription information 1 is replaced with the first subscription information 2, and the network slice 1 is replaced with the network slice 2. Details are not described herein again.

This application does not limit an execution sequence of requesting, by the gateway device, the second allowed NSSAI 1 of the terminal from the first core network device and requesting, by the gateway device, the second allowed NSSAI 2 of the terminal from the third core network device.

In step A2, the first core network device sends the second allowed NSSAI 1 to the gateway device, and the third core network device sends the second allowed NSSAI 2 to the gateway device. Correspondingly, the gateway device receives the second allowed NSSAI 1 and the second allowed NSSAI 2. The second allowed NSSAI 1 and the second allowed NSSAI 2 may be carried in a conventional message, or may be carried in a new message. An execution sequence of receiving the second allowed NSSAI 1 and receiving the second allowed NSSAI 2 by the gateway device is not limited in this application.

In step A3, the gateway device determines the first allowed NSSAI based on the second allowed NSSAI 1 and the second allowed NSSAI 2. For example, the first allowed NSSAI includes an identifier of a network slice in the second allowed NSSAI 1 and an identifier of a network slice in the second allowed NSSAI 2. For example, if the second allowed NSSAI 1 includes the identifier of the network slice 1, and the second allowed NSSAI 2 includes an identifier of the network slice 2, the gateway device may determine that the first allowed NSSAI includes the identifier of the network slice 1 and the identifier of the network slice 2.

In some possible implementations, the gateway device may request second allowed NSSAI from all core network devices connected to the gateway device, to obtain at least one piece of second allowed NSSAI. That is, the at least one core network device may be all the core network devices connected to the gateway device. In this case, in step A1, the message that is sent by the gateway device to each core network device and that is for requesting the second allowed NSSAI includes the first identifier of the terminal and the identifiers of the M network slices. For example, the message c1 sent by the gateway device to the first core network device includes the first identifier of the terminal and the identifiers of the M network slices. Then, the first core network device may determine the second allowed NSSAI 1 based on the first identifier of the terminal and the identifiers of the M network slices. Optionally, the second allowed NSSAI 1 is obtained by obtaining an intersection set of the requested NSSAI (including the identifiers of the M network slices), a network slice that the terminal subscribes to and that is indicated by the first subscription information 1, a network slice list supported by the core network device, and a network slice list supported by a TA in which the terminal is located. The network slice list supported by the TA in which the terminal is located may be obtained based on the network slice list supported by the access network device.

In some other possible implementations, before step A1, the gateway device may determine the at least one core network device. For a determining manner, refer to the foregoing manner c1 or manner c2. Details are not described herein again.

In this manner, the gateway device can quickly and accurately determine the first allowed NSSAI based on the at least one piece of second allowed NSSAI, and a computing amount used by the gateway device to determine the first allowed NSSAI can be reduced. Therefore, compute resources of the gateway device can be saved, and power consumption of the gateway device can be reduced.

It should be understood that the manners b1 to b3 may be used separately, or may be used together. In other words, the identifier of the network slice in the first allowed NSSAI may be obtained based on one or more of the manners b1 to b3. For example, the first allowed NSSAI includes identifiers of a network slice b and a network slice c, and the identifiers of the network slice b and the network slice c may be both obtained in the manner b1, or the identifier of the network slice b is obtained in the manner b1, and the identifier of the network slice c is obtained in the manner b2.

In the manner a1, the gateway device may request the first information from each core network device in the at least one core network device, so that the at least one piece of first information can be quickly obtained, thereby quickly and accurately determining the first allowed NSSAI.

### Manner a2:

The manner a2 includes steps C1 to C5.

**Step C1:** The gateway device sends a first message to a first core network device; and correspondingly, the first core network device receives the first message from the gateway device. The first message may be for requesting second information, where the second information is for determining the first allowed NSSAI.

For example, each of at least one core network device may support a part of network slices in the M network slices. For the M network slices, the gateway device may send the first message to the first core network device in the at least one core network device, to request the second information that is for determining the first allowed NSSAI. For example, the at least one core network device includes the first core network device and a third core network device, the M network slices include a network slice 1 and a network slice 2, the first core network device supports the network slice 1, and the third core network device supports the network slice 2. The gateway device may send the first message to the first core network device.

**Step C2:** The first core network device requests seventh information from the third core network device.

Optionally, the seventh information may include at least one of the following (1) to (3):
(1) First subscription information 2 of the terminal: The first subscription information 2 may indicate subscription information of the terminal obtained by the third core network device. For specific content of the first subscription information 2, refer to the manner b1. Details are not described herein again.
(2) Indication information 2 indicating whether the terminal subscribes to a network slice 2: For specific content of the indication information 2, refer to the manner b2. Details are not described herein again.
(3) Second allowed NSSAI 2: The second allowed NSSAI 2 is NSSAI 2 determined by the third core network device for the terminal. For specific content of the second allowed NSSAI 2, refer to the manner b3. Details are not described herein again.

**Step C3:** The third core network device sends the seventh information to the first core network device. Correspondingly, the first core network device receives the seventh information from the third core network device. The seventh information may be carried in a conventional message, or may be carried in a new message.

Steps C2 and C3 may be optional.

**Step C4:** The first core network device sends the second information to the gateway device; and correspondingly, the gateway device receives the second information from the first core network device.

Optionally, the second information may be determined based on the seventh information. Specific determined content is described in the following manner d1 to manner d4. Details are not described herein. The second information may be carried in a conventional message, or may be carried in a new message.

**Step C5:** The gateway device determines the first allowed NSSAI based on the second information.

Optionally, in the manner a2, the second information may include at least one piece of first information. For specific content of the at least one piece of first information, refer to the descriptions of the at least one piece of information in the manner a1. Additionally/Alternatively, the second information indicates the first allowed NSSAI. For example, the second information includes the first allowed NSSAI.

Corresponding to different content of the second information and the seventh information, steps C1 to C5 may have different manners, for example, the manner d1, the manner d2, the manner d3, or the manner d4. The following separately describes the manner d1, the manner d2, the manner d3, or the manner d4 by using an example in which the at least one core network device includes the first core network device and the third core network device, the M network slices include a network slice 1 and a network slice 2, the first core network device supports the network slice 1, and the third core network device supports the network slice 2.

### Manner d1:

In the manner d1, the second information includes first subscription information 1 of the terminal and first subscription information 2 of the terminal, and the seventh information includes the first subscription information 2. For specific content of the first subscription information 1 and the first subscription information 2, refer to the manner b1. Details are not described herein again. The following describes steps C1 to C5 in the manner d1.

In step C1, the gateway device sends a first message to the first core network device, where the first message is for requesting the second information including the first subscription information 1 and the first subscription information 2. Optionally, the first message includes a first identifier of the terminal. For specific content of the first identifier, refer to the manner a1. Details are not described herein again. In this way, the first core network device can obtain the first subscription information 1 of the terminal based on the first identifier. For specific obtained content, refer to the manner b1. Details are not described herein again.

In step C2, the first core network device may request the first subscription information 2 by sending a message d1 to the third core network device, where the message d1 includes the first identifier. In this way, the third core network device can obtain the first subscription information 2 of the terminal based on the first identifier. For specific obtained content, refer to the manner b1. Details are not described herein again.

Optionally, before step C2, the first core network device may determine the third core network device. In some possible implementations, after determining the at least one core network device including the third core network device, the gateway device may send indication information of the third core network device to the first core network device. The indication information of the third core network device is, for example, an identifier or an IP address of the third core network device. The first core network device may determine the third core network device based on the indication information of the third core network device. For specific content of determining the at least one core network device by the gateway device, refer to the descriptions of determining the at least one core network device by the gateway device in the manner b1. Details are not described herein again. The indication information of the third core network device may be included in the message d1, or may be included in another message. In some other possible implementations, the first core network device may determine the third core network device based on an identifier of the network slice 2 and a network slice list supported by the third core network device. For example, if a network slice list supported by a core network device includes the identifier of the network slice 2, the first core network device may determine the core network device as the third core network device.

In step C3, the third core network device may send the first subscription information 2 to the first core network device. The first subscription information 2 may be carried in a conventional message, or may be carried in a new message.

In step C4, the first core network device sends the second information including the first subscription information 1 and the first subscription information 2 to the gateway device; and correspondingly, the gateway device receives the second information. The second information may be carried in a conventional message, or may be carried in a new message. The first subscription information 1 and the first subscription information 2 may be carried in a same message, or may be carried in different messages.

In step C5, the gateway device determines the first allowed NSSAI based on the first subscription information 1 and the first subscription information 2 in the second information. For a determining manner, refer to the descriptions of step A3 in the manner b1. Details are not described herein again.

In this manner, the gateway device can quickly and accurately determine the first allowed NSSAI based on the first subscription information of the terminal. In addition, in the method, the at least one core network device needs to send only the first subscription information to the gateway device, and the at least one core network device does not need to determine the first allowed NSSAI. Therefore, compute resources of the at least one core network device can be saved, and power consumption of the at least one core network device can be reduced.

### Manner d2:

In the manner d2, the second information includes indication information 1 and indication information 2, and the seventh information includes the indication information 2. For specific content of the indication information 1 and the indication information 2, refer to the manner b2. Details are not described herein again. The following describes steps C1 to C5 in the manner d2.

In step C1, the gateway device sends the first message to the first core network device, where the first message is for requesting the second information including the indication information 1 and the indication information 2. Optionally, the first message includes a first identifier of the terminal, an identifier of the network slice 1, and an identifier of the network slice 2. For specific content of the first identifier, refer to the manner b1. Details are not described herein again. In this way, the first core network device can determine the indication information 1 based on the first identifier and the identifier of the network slice 1. For a determining manner, refer to the manner b2. Details are not described herein again.

In step C2, the first core network device may request the indication information 2 by sending a message e1 to the third core network device, where the message e1 includes the first identifier and the identifier of the network slice 2. In this way, the third core network device can determine the indication information 2 based on the first identifier and the identifier of the network slice 2. For a determining manner, refer to the manner b2. Details are not described herein again.

Optionally, before step C2, the first core network device may determine the third core network device. For a determining manner, refer to the manner d1. Details are not described herein again.

In step C3, the third core network device sends the indication information 2 to the first core network device. The indication information 2 may be carried in a conventional message, or may be carried in a new message.

In step C4, the first core network device sends the second information including the indication information 1 and the indication information 2 to the gateway device; and correspondingly, the gateway device receives the second information. The second information may be carried in a conventional message, or may be carried in a new message. The indication information 1 and the indication information 2 may be carried in a same message, or may be carried in different messages.

In step C5, the gateway device determines the first allowed NSSAI based on the indication information 1 and the indication information 2 in the second information. For a determining manner, refer to the descriptions of step A3 in the manner b2. Details are not described herein again.

In this manner, the gateway device can quickly and accurately determine the first allowed NSSAI based on at least one piece of indication information (for example, the indication information 1 and the indication information 2). In addition, in the method, the at least one core network device needs to send only the second information including the at least one piece of indication information to the gateway device, so that signaling overheads can be reduced, and the at least one core network device does not need to determine the first allowed NSSAI. Therefore, compute resources of the at least one core network device can be saved, and power consumption of the at least one core network device can be reduced.

### Manner d3:

In the manner d3, the second information includes second allowed NSSAI 1 and second allowed NSSAI 2, and the seventh information includes the second allowed NSSAI 2. For specific content of the second allowed NSSAI 1 and the second allowed NSSAI 2, refer to the manner b3. Details are not described herein again. The following describes steps C1 to C5 in the manner d3.

In step C1, the gateway device sends the first message to the first core network device, where the first message is for requesting the second information including the second allowed NSSAI 1 and the second allowed NSSAI 2. Optionally, the first message includes a first identifier of the terminal, an identifier of the network slice 1, and an identifier of the network slice 2. For specific content of the first identifier, refer to the manner b1. Details are not described herein again. After receiving the first message, the first core network device may determine the second allowed NSSAI 1 based on the first identifier and the identifier of the network slice 1. For a determining manner, refer to the manner b3. Details are not described herein again.

In step C2, the first core network device may request the second allowed NSSAI 2 by sending a message f1 to the third core network device, where the message f1 includes the first identifier and the identifier of the network slice 2. In this way, the third core network device can determine the second allowed NSSAI 2 based on the first identifier and the identifier of the network slice 2. For a determining manner, refer to the manner b3. Details are not described herein again.

Optionally, before step C2, the first core network device may determine the third core network device. For a determining manner, refer to the manner d1. Details are not described herein again.

In step C3, the third core network device sends the second allowed NSSAI 2 to the first core network device. The second allowed NSSAI 2 may be carried in a conventional message, or may be carried in a new message.

In step C4, the first core network device sends the second information including the second allowed NSSAI 1 and the second allowed NSSAI 2 to the gateway device. Correspondingly, the gateway device receives the second information. The second information may be carried in a conventional message, or may be carried in a new message. The second allowed NSSAI 1 and the second allowed NSSAI 2 may be carried in a same message, or may be carried in different messages.

In step C5, the gateway device determines the first allowed NSSAI based on the second allowed NSSAI 1 and the second allowed NSSAI 2 in the second information. For a determining manner, refer to the manner b3. Details are not described herein again.

In this manner, the gateway device can quickly and accurately determine the first allowed NSSAI based on the at least one piece of second allowed NSSAI, and a computing amount used by the gateway device to determine the first allowed NSSAI can be reduced. Therefore, compute resources of the gateway device can be saved, and power consumption of the gateway device can be reduced.

### Manner d4:

In the manner d4, the second information indicates the first allowed NSSAI. The following describes steps C1 to C5 in the manner d4.

In step C1, the gateway device sends the first message to the first core network device, where the first message is for requesting the second information indicating the first allowed NSSAI. Optionally, the first message includes a first identifier of the terminal, an identifier of the network slice 1, and an identifier of the network slice 2. For specific content of the first identifier, refer to the manner b1. Details are not described herein again.

Corresponding to different content of the seventh information, steps C2 to C5 in the manner d4 may have different manners, for example, a manner e1, a manner e2, or a manner e3.

### Manner e1:

In the manner e1, the seventh information includes the first subscription information 2. The following describes steps C2 to C5 in the manner e1.

For steps C2 and C3 in the manner e1, refer to steps C2 and C3 in the manner d1. Details are not described herein again.

In step C4, before sending the second information, the first core network device may determine the first allowed NSSAI based on the first subscription information 1 and the first subscription information 2, to determine the second information. For specific content of determining the first allowed NSSAI by the first core network device, refer to the descriptions of "the gateway device determines the first allowed NSSAI based on the first subscription information 1 and the first subscription information 2" in the manner b1. The only difference is that the gateway device is replaced with the first core network device. For specific content of determining the first subscription information 1 by the first core network device, refer to the manner b1. Details are not described herein again.

In step C5, the gateway device may determine, based on the second information, the first allowed NSSAI indicated by the second information. For example, the second information includes the first allowed NSSAI, and the gateway device may obtain the first allowed NSSAI in the second information.

In this manner, the first core network device can quickly and accurately determine the first allowed NSSAI based on the first subscription information of the terminal. In addition, in the method, the first core network device may indicate the first allowed NSSAI to the gateway device by using the second information, so that a computing amount used by the gateway device to determine the first allowed NSSAI can be reduced. Therefore, compute resources of the gateway device can be saved, and power consumption of the gateway device can be reduced.

### Manner e2:

In the manner e2, the seventh information includes the indication information 2. The following describes steps C2 to C5 in the manner e2.

For steps C2 and C3 in the manner e2, refer to steps C2 and C3 in the manner d2. Details are not described herein again.

In step C4, before sending the second information, the first core network device may determine the first allowed NSSAI based on the indication information 1 and the indication information 2, to determine the second information. For specific content of determining the first allowed NSSAI by the first core network device, refer to the descriptions of "the gateway device determines the first allowed NSSAI based on the indication information 1 and the indication information 2" in the manner b2. The only difference is that the gateway device is replaced with the first core network device. For specific content of determining the indication information 1 by the first core network device, refer to the manner b2. Details are not described herein again.

In step C5, the gateway device may determine, based on the second information, the first allowed NSSAI indicated by the second information. For specific content, refer to step C5 in the manner e1.

In this manner, the first core network device can quickly and accurately determine the first allowed NSSAI based on at least one piece of indication information (for example, the indication information 1 and the indication information 2). In addition, in the method, the first core network device may indicate the first allowed NSSAI to the gateway device by using the second information, so that a computing amount used by the gateway device to determine the first allowed NSSAI can be reduced. Therefore, compute resources of the gateway device can be saved, and power consumption of the gateway device can be reduced.

### Manner e3:

In the manner e3, the seventh information includes the second allowed NSSAI 2. The following describes steps C3 to C5 in the manner e3.

For steps C2 and C3 in the manner e3, refer to steps C2 and C3 in the manner d3. Details are not described herein again.

In step C4, before sending the second information, the first core network device may determine the first allowed NSSAI based on the second allowed NSSAI 1 and the second allowed NSSAI 2, to determine the second information. For specific content of determining the first allowed NSSAI by the first core network device, refer to the descriptions of "the gateway device determines the first allowed NSSAI based on the second allowed NSSAI 1 and the second allowed NSSAI 2" in the manner b3. The only difference is that the gateway device is replaced with the first core network device. For specific content of determining the second allowed NSSAI 1 by the first core network device, refer to the manner b3. Details are not described herein again.

In this manner, the first core network device can quickly and accurately determine the first allowed NSSAI based on at least one piece of second allowed NSSAI. In addition, in the method, the first core network device may indicate the first allowed NSSAI to the gateway device by using the second information, so that a computing amount used by the gateway device to determine the first allowed NSSAI can be reduced. Therefore, compute resources of the gateway device can be saved, and power consumption of the gateway device can be reduced.

In the manner a2, the gateway device can obtain the second information from the first core network device, where the second information is related to the first core network device and a third core network device. In this way, the terminal does not need to set up NAS connections to a plurality of core network devices, and the gateway device can quickly and accurately determine the first allowed NSSAI based on the second information, thereby reducing a quantity of NAS connections set up between the terminal and the core network devices, and reducing power consumption of the terminal.

In some implementations, in the manner a2, the gateway device may determine the first core network device.

In some possible implementations, after determining the at least one core network device, the gateway device may select a core network device from the at least one core network device as the first core network device. For a manner in which the gateway device determines the at least one core network device, refer to the manner c1 or the manner c2. Details are not described herein again. The following uses an example to describe the manner in which the gateway device selects the first core network device.

In some examples, the gateway device may randomly select a core network device from the at least one core network device as the first core network device. For example, the at least one core network device includes an AMF 1 and an AMF 2. The gateway device may randomly select an AMF from the AMF 1 and the AMF 2 as the first core network device.

In some other examples, the gateway device may select, from the at least one core network device, a core network device connected to the gateway device as the first core network device. For example, the at least one core network device includes an AMF 1 and an AMF 2. There is a connection between the AMF 1 and the gateway device, and there is no direct connection between the AMF 2 and the gateway device. The gateway device may select the AMF 1 as the first core network device.

In some other possible implementations, the gateway device may use, as the first core network device, a 1^{st} core network device in the at least one core network device determined in the manner c1 or the manner c2. Optionally, in this case, in the manner c1, the access network device may determine only the first core network device, without a need of determining a core network device other than the first core network device in the at least one core network device, and send indication information of the first core network device to the gateway device; in the manner c2, the gateway device may determine the first core network device, without a need of determining a core network device other than the first core network device in the at least one core network device.

In some possible implementations, the gateway device may further integrate information about the at least one core network device. There may be a plurality of integration manners, for example, a manner f1 or a manner f2.

### Manner f1:

The manner f1 may include steps D1 and D2.

**Step D1:** The gateway device obtains a network slice list supported by the at least one core network device.

For example, the gateway device may obtain a network slice list supported by each core network device in the at least one core network device. For example, the at least one core network device includes an AMF 1 and an AMF 2. The gateway device may obtain, from the AMF 1, a network slice list supported by the AMF 1, and obtain, from the AMF 2, a network slice list supported by the AMF 2.

In some examples, the gateway device may actively request, from each core network device in the at least one core network device, the network slice list supported by each core network device. For example, after receiving the first request or receiving a next generation (next generation, NG) setup request (NG setup request) message from the access network device, the gateway device may request, from each core network device in the at least one core network device, the network slice list supported by each core network device.

In some other examples, during setup of an NG interface with each core network device or during an AMF configuration update, the gateway device may obtain, from the core network device, the network slice list supported by the core network device.

In still some other examples, each core network device in the at least one core network device may periodically send, to the gateway device, the network slice list supported by each core network device. A sending periodicity may be preconfigured, or may be determined by the core network device or the gateway device. This is not limited in this application.

**Step D2:** The gateway device sends third information to the access network device managed by the gateway device.

The third information indicates a first network slice list, and the first network slice list includes identifiers of all network slices supported by the at least one core network device. For example, the third information includes the first network slice list. For example, the at least one core network device includes an AMF 1 and an AMF 2, a network slice list supported by the AMF 1 includes an identifier of a network slice 1, and a network slice list supported by the AMF 2 includes an identifier of a network slice 2. The first network slice list includes the identifiers of the network slice 1 and the network slice 2.

In this manner, the gateway device can integrate the information about the at least one core network device, to better support a network slice. In addition, in this manner, the access network device managed by the gateway device can obtain the first network slice list, to learn of all the network slices supported by the at least one core network device, and further perform more comprehensive admission management and/or mobility management on the terminal that uses a service of a network slice.

### Manner f2:

The manner f2 may include steps E1 and E2.

**Step E1:** The gateway device obtains a network slice list supported by the at least one core network device.

For specific content of step E1, refer to step D1. Details are not described herein again.

**Step E2:** The gateway device sends fourth information to the access network device managed by the gateway device.

The fourth information indicates a network slice list supported by each core network device in the at least one core network device. For example, the at least one core network device includes an AMF 1 and an AMF 2, a network slice list 1 supported by the AMF 1 includes an identifier of a network slice 1, and a network slice list 2 supported by the AMF 2 includes an identifier of a network slice 2. The fourth information includes information a1 and information a2. The information a1 includes indication information (for example, an identifier or an IP address of the AMF 1) of the AMF 1 and a network slice list 1 supported by the AMF 1. The information a2 includes indication information (for example, an identifier or an IP address of the AMF 2) of the AMF 2 and a network slice list 2 supported by the AMF 2. In this way, the access network device can determine, based on the fourth information, the network slice list supported by each core network device.

In this manner, the gateway device can integrate the information about the at least one core network device, to better support a network slice. In addition, in this manner, the access network device managed by the gateway device can determine the network slice list supported by each core network device, to perform more comprehensive admission management and/or mobility management on the terminal that uses a service of a network slice, and/or determine the at least one core network device in the manner c1.

It should be understood that the manner f1 or the manner f2 may be combined with the method shown in FIG. 3, or may be separately used as an embodiment.

In some possible implementations, the gateway device may further integrate information about at least one access network device managed by the gateway device. There may be a plurality of integration manners, for example, a manner g1 or a manner g2.

### Manner g1:

The manner g1 may include steps G1 and G2.

**Step G1:** The gateway device obtains a network slice list supported by each TA of the at least one access network device managed by the gateway device.

For example, the gateway device may obtain a network slice list supported by each TA of each core network device in the at least one access network device. For example, the at least one access network device includes an AN device 1 and an AN device 2. The gateway device may obtain, from the AN device 1, a network slice list supported by each TA of the AN device 1, and obtain, from the AN device 2, a network slice list supported by each TA of the AN device 2.

In some examples, the gateway device may actively request, from each access network device in the at least one access network device, a network slice list supported by each TA of each access network device. For example, after receiving the first request or receiving an NG setup request message from the access network device, the gateway device may request, from each access network device in the at least one access network device, the network slice list supported by each TA of each access network device.

In some other examples, during setup of an NG interface with each access network device or during an access network device configuration update, the gateway device may obtain, from the access network device, the network slice list supported by each TA of the access network device.

In some other examples, each access network device in the at least one access network device may periodically send, to the gateway device, the network slice list supported by each TA of each access network device. A sending periodicity may be preconfigured, or may be determined by the access network device or the gateway device. This is not limited in this application.

**Step G2:** The gateway device sends fifth information to a second core network device. The second core network device and the foregoing first core network device may be a same core network device, or may be different core network devices.

The fifth information indicates a second network slice list, and the second network slice list includes identifiers of all network slices supported by each TA of the at least one access network device. For example, the at least one access network device includes an AN device 1 and an AN device 2. A TA 1 of the AN device 1 supports a network slice 1, a TA 2 of the AN device 1 supports a network slice 2, and a TA 1 of the AN device 2 supports the network slice 1. The second network slice list includes identifiers of the network slice 1 and the network slice 2.

In this manner, the gateway device can integrate the information about the at least one access network device, to better support a network slice. In addition, in this manner, the second core network device can obtain the second network slice list, to learn of all the network slices supported by each TA of the at least one access network device, and further perform more comprehensive mobility management on the terminal that uses a service of the network slice.

### Manner g2:

The manner g2 may include steps H1 and H2.

**Step H1:** The gateway device obtains a network slice list supported by each TA of the at least one access network device managed by the gateway device.

For specific content of step H1, refer to step G1. Details are not described herein again.

**Step H2:** The gateway device sends sixth information to a second core network device. The second core network device and the foregoing first core network device may be a same core network device, or may be different core network devices.

The sixth information indicates a network slice list supported by each TA of each access network device in the at least one access network device. For example, the at least one access network device includes an AN device 1 and an AN device 2. A TA 1 of the AN device 1 supports a network slice 1, a TA 2 of the AN device 1 supports a network slice 2, and a TA 1 of the AN device 2 supports the network slice 1. The sixth information includes information a3 and information a4. The information a3 includes a TAI of the TA 1 and an identifier of the network slice 1. The information a4 includes a TAI of the TA 2 and an identifier of the network slice 2. In this way, the second core network device can determine, based on the sixth information, a network slice supported by each TA.

In this manner, the gateway device can integrate the information about the at least one access network device, to better support a network slice. In addition, in this manner, the second core network device can learn of the network slices supported by each TA of the at least one access network device, to perform more comprehensive mobility management on the terminal that uses services of the network slices, and can determine the foregoing second information based on the network slices supported by each TA of the at least one access network device.

It should be understood that the manner g1 or the manner g2 may be combined with the method shown in FIG. 3, or may be separately used as an embodiment.

An embodiment of this application provides another communication method. FIG. 4 is a schematic flowchart corresponding to a communication method according to an embodiment of this application. An access network device is, for example, a home base station, a gateway device may be an access network gateway device, for example, a home base station gateway, and a core network device is, for example, an AMF. As shown in FIG. 4, the method includes the following steps.

**S401:** A terminal sends a second request to the gateway device, and correspondingly, the gateway device receives the second request from the terminal.

The second request is for requesting to provide a service of a first network slice for the terminal. For example, the second request may include requested NSSAI, and the requested NSSAI includes an identifier of the first network slice, to request to provide the service of the first network slice for the terminal.

In some implementations, the terminal may send the second request to the gateway device via a first access network device. Specifically, after the terminal sends the second request to the first access network device, the first access network device forwards the second request from the terminal to the gateway device. For example, the second request is a registration request. The terminal accesses a cell of the first access network device, and may transparently transmit the registration request to the first access network device by using an RRC setup complete message. The registration request is for requesting to provide the service of the first network slice for the terminal. Then, the first access network device may forward the registration request to the gateway device.

**S402:** When the first access network device that provides a service for the terminal does not support the first network slice, the gateway device sends eighth information to the first access network device; and correspondingly, the first access network device receives the eighth information from the gateway device.

The eighth information indicates to redirect or hand over the terminal from the first access network device to a second access network device, and the second access network device supports the first network slice. The first access network device and the second access network device may be access network devices managed by the gateway device. For example, the eighth information may include indication information (for example, an identifier or an IP address of the second access network device) of the second access network device. The eighth information may be carried in a conventional message, or may be carried in a new message.

Optionally, when the eighth information indicates to redirect the terminal from the first access network device to the second access network device, the eighth information may include target NSSAI and a radio access technology (radio access technology, RAT)/frequency selection priority (RAT/Frequency Selection Priority, RFSP) index (RFSP index) corresponding to the target NSSAI, where the target NSSAI may include the identifier of the first network slice.

The method shown in FIG. 4 is described by using the first network slice as an example. It should be understood that the method shown in FIG. 4 is also applicable to a plurality of network slices. In this case, the first network slice may be replaced with a plurality of network slices.

According to the method shown in FIG. 4, when the first access network device that provides a service for the terminal does not support the first network slice, if the gateway device receives the second request for requesting to provide the service of the first network slice for the terminal, the gateway device may send the eighth information in a timely manner, to redirect or hand over the terminal from the first access network device to the second access network device, thereby avoiding or reducing rejection caused by a fact that a cell accessed by the terminal does not support a requested network slice. In this way, the terminal can obtain the service of the first network slice in a timely manner.

In some possible implementations, the method shown in FIG. 4 further includes step I1.

**Step 11:** The gateway device determines the second access network device.

In some possible implementations, the gateway device may determine the second access network device by itself. For example, the second request includes the identifier of the first network slice. The gateway device may determine, based on a network slice list supported by at least one access network device managed by the gateway device and the identifier of the first network slice, that an access network device that supports the first network slice in the at least one access network device is the second access network device. For example, if a network slice list supported by an AN device 1 managed by the gateway device includes an identifier of a network slice 1, and a network slice list supported by an AN device 2 managed by the gateway device includes the identifier of the first network slice, the gateway device determines that the AN device 2 is the second access network device. In this manner, the gateway device can quickly and accurately determine the second access network device, thereby avoiding or reducing rejection caused by that a cell accessed by the terminal does not support a requested network slice. In this way, the terminal can obtain the service of the first network slice in a timely manner.

In some other possible implementations, after determining the second access network device, a first core network device may send the indication information (for example, the identifier or the IP address of the second access network device) of the second access network device to the gateway device. Then, the gateway device determines the second access network device based on the indication information of the second access network device. The first core network device may be a serving AMF that sets up a NAS connection to the terminal. The following describes how the first core network device determines the second access network device. For example, the first core network device may determine the second access network device after receiving the second request from the gateway device, where the second request includes the identifier of the first network slice. For specific content of determining the second access network device by the first core network device, refer to the descriptions of determining the second access network device by the gateway device. Details are not described herein again. In this manner, regardless of whether the gateway device has a NAS function, the gateway device may learn of the second core network device.

In some possible implementations, the method shown in FIG. 4 further includes step J1.

**Step J1:** The gateway device determines that the first access network device does not support the first network slice, and determines that one or more core network devices connected to the gateway device support the first network slice.

In some possible implementations, the gateway device may determine by itself that the first access network device does not support the first network slice, and determines that the one or more core network devices connected to the gateway device support the first network slice. For example, the second request includes the identifier of the first network slice. The gateway device may determine, based on a network slice list supported by the first access network device and the identifier of the first network slice, that the first access network device does not support the first network slice. For example, if the network slice list supported by the first access network device includes an identifier of a network slice 1, the identifier of the first network slice is an identifier of a network slice 2, and the network slice 1 is different from the network slice 2, the gateway device determines that the first access network device does not support the first network slice. The gateway device may determine, based on a network slice list supported by the one or more core network devices connected to the gateway device and the identifier of the first network slice, that the one or more core network devices support the first network slice. For example, if the one or more core network devices connected to the gateway device include an AMF 1 and an AMF 2, a network slice list supported by the AMF 1 includes an identifier of a network slice 1, a network slice list supported by the AMF 2 includes an identifier of a network slice 2, and the identifier of the first network slice is the identifier of the network slice 2, the gateway device determines that the one or more core network devices connected to the gateway device support the first network slice.

In some other possible implementations, after determining that the first access network device does not support the first network slice and determining that one or more core network devices connected to the gateway device support the first network slice, the first core network device may send first indication information to the gateway device. The first indication information indicates that the first access network device does not support the first network slice and that the one or more core network devices connected to the gateway device support the first network slice. For example, when a value of the first indication information is a third value (for example, 0 or 1), the first indication information indicates that the first access network device does not support the first network slice and that the one or more core network devices connected to the gateway device support the first network slice. The gateway device determines, based on the first indication information, that the first access network device does not support the first network slice and that the one or more core network devices connected to the gateway device support the first network slice. In this manner, the gateway device can quickly and accurately determine that the first access network device does not support the first network slice, and determine that the one or more core network devices connected to the gateway device support the first network slice. Then, the gateway device may indicate to redirect or hand over the terminal from the first access network device to the second access network device, thereby avoiding or reducing rejection caused by that a cell accessed by the terminal does not support a requested network slice. In this way, the terminal can obtain the service of the first network slice in a timely manner.

The following describes how the first core network device determines that the first access network device does not support the first network slice and determines that the one or more core network devices connected to the gateway device support the first network slice. For example, after receiving the second request from the gateway device, the first core network device may determine that the first access network device does not support the first network slice, and determine that the one or more core network devices connected to the gateway device support the first network slice. For a determining manner, refer to the descriptions of determining, by the gateway device, that the first access network device does not support the first network slice, and determining that the one or more core network devices connected to the gateway device support the first network slice. The only difference is that the gateway device is replaced with the first core network device. Details are not described herein again.

In this manner, regardless of whether the gateway device has a NAS function, the gateway device can learn that the first access network device does not support the first network slice and that the one or more core network devices connected to the gateway device support the first network slice.

Optionally, step J1 may be performed before step I1.

An embodiment of this application provides still another communication method. FIG. 5 is a schematic flowchart corresponding to a communication method according to an embodiment of this application. An access network device is, for example, a home base station, a gateway device may be an access network gateway device, for example, a home base station gateway, and a core network device is, for example, an AMF. As shown in FIG. 5, the method includes the following steps.

**S501:** A first access network device sends a handover request to the gateway device, and correspondingly, the gateway device receives the handover request from the first access network device.

The first access network device is an access network device managed by the gateway device. The handover request is for requesting to hand over a terminal from the first access network device to a second access network device. The handover request includes indication information of the second access network device, where the indication information indicates an identifier of the second access network device.

**S502:** The gateway device sends a third request to the second access network device depending on whether there is a connection between the gateway device and the second access network device; and correspondingly, the second access network device receives the third request. The third request may be for requesting to hand over the terminal from the first access network device to the second access network device.

In some possible implementations, there is a connection between the gateway device and the second access network device. The gateway device may directly send the third request to the second access network device. For example, the gateway device may send the third request to the second access network device through the connection between the gateway device and the second access network device, where the third request is a handover request (handover request). In this manner, the gateway device can quickly send the third request to the second access network device, so that the terminal device can be quickly handed over to the second access network device.

In some other possible implementations, there is no connection between the gateway device and the second access network device. The gateway device may send the third request to the second access network device via the core network device. For example, the gateway device may send the third request to the core network device, and then the core network device forwards the third request to the second access network device. The third request may be carried in a handover required (handover required) message sent by the gateway device to the core network device and a handover request message sent by the core network device to the second access network device. In this manner, the gateway device can send the third request to the second access network device via the core network device. In this way, even if there is no connection between the gateway device and the second access network device, the gateway device may send the third request to the second access network device, to hand over the terminal to the second access network device.

According to the method shown in FIG. 5, regardless of whether there is a connection between the gateway device and the second access network device, the gateway device may send the third request to the second access network device, to hand over the terminal to the second access network device, thereby implementing a handover procedure of the terminal.

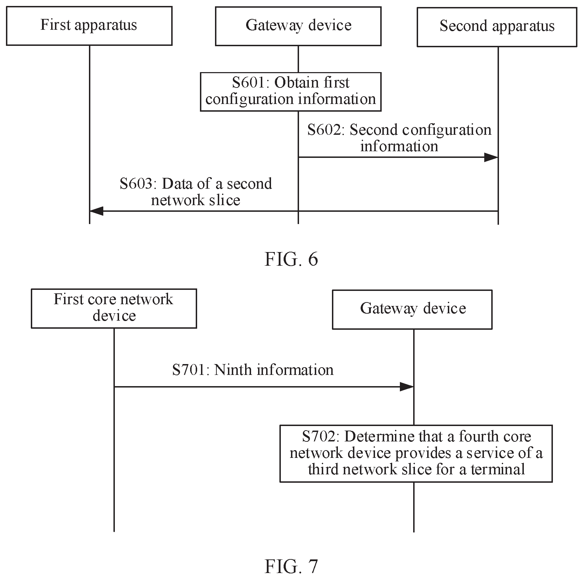

An embodiment of this application provides yet another communication method. FIG. 6 is a schematic flowchart corresponding to a communication method according to an embodiment of this application. A first apparatus is a user plane function network element, and a second apparatus is an access network device; or a first apparatus is an access network device, and a second apparatus is a user plane function network element. An access network device is, for example, a home base station, a gateway device may be an access network gateway device, for example, a home base station gateway, and a core network device is, for example, an AMF and a UPF. As shown in FIG. 6, the method includes the following steps.

**S601:** The gateway device obtains first configuration information.

The first configuration information indicates transport layer configurations of U data bearers of the first apparatus, where U is a positive integer. For example, the first configuration information may include at least one of the following: a transport network layer (transport network layer, TNL) address, a tunnel endpoint identifier (tunnel endpoint identifier, TEID), a user datagram protocol (user datagram protocol, UDP) port number, and an IP address of the first apparatus for a general packet radio service (general packet radio service, GPRS) tunnelling protocol for the user plane (GPRS tunnelling protocol for the user plane, GTP-U) tunnel of the U data bearers of the first apparatus. The first configuration information may be carried in a conventional message (for example, a PDU session resource setup request (PDU session resource setup request) or a PDU session resource setup response (PDU session resource setup response)), or may be carried in a new message.

**S602:** The gateway device sends second configuration information to the second apparatus.

The second configuration information indicates transport layer configurations of V data bearers of the gateway device, where V is a positive integer. For example, the second configuration information may include at least one of the following: a TNL address, a TEID, a UDP port number, and an IP address of the gateway device for a GTP-U tunnel of the V data bearers of the gateway device. The second configuration information may be carried in a conventional message, or may be carried in a new message.

Optionally, there is a correspondence between the U data bearers and the V data bearers. The correspondence between the U data bearers and the V data bearers may be determined by the gateway device, may be indicated by another device (for example, a device managing the gateway device) to the gateway device, or may be preconfigured.

In some examples, U is 1, and V is 1. To be specific, the gateway device splits one N3 tunnel between the first apparatus and the second apparatus into two N3 tunnels, which are respectively an N3 tunnel between the first apparatus and the gateway device and an N3 tunnel between the gateway device and the second apparatus. This example may be used in a case of IP unreachability between the first apparatus and the second apparatus.

In some other examples, U is 1, and V is greater than 1. To be specific, a plurality of N3 tunnels between the gateway device and the second apparatus correspond to one N3 tunnel between the first apparatus and the gateway device. This example is applicable to at least one of the following scenarios: Downlink transmission is unreliable; a UPF capability is limited; and a plurality of UPFs cooperate to provide a service for a terminal. For example, the first apparatus is an access network device, and the second apparatus is a UPF. If both a UPF #1 and a UPF #2 can provide a data service of a network slice #2 for the terminal, the gateway device may enable V N3 tunnels that belong to the terminal and are associated with the network slice #2 to correspond to one N3 tunnel associated with the network slice #2.

In still some other examples, U is greater than 1, and V is 1. To be specific, a plurality of N3 tunnels between the gateway device and the first apparatus correspond to one N3 tunnel between the second apparatus and the gateway device. This example is applicable to at least one of the following scenarios: Uplink transmission is unreliable; a UPF capability is limited; and a plurality of UPFs cooperate to provide a service for the terminal. For example, the first apparatus is a UPF, and the second apparatus is an access network device. If both a UPF #1 and a UPF #2 can provide a data service of a network slice #2 for the terminal, the gateway device may enable one N3 tunnel that belongs to the terminal and is associated with the network slice #2 to correspond to U N3 tunnels associated with the network slice #2.

In yet some other examples, U is greater than 1, and V is greater than 1. To be specific, a plurality of N3 tunnels between the gateway device and the first apparatus correspond to a plurality of N3 tunnels between the second apparatus and the gateway device.

**S603:** The gateway device receives data of a second network slice from the second apparatus through the V data bearers, and sends the data of the second network slice to the first apparatus through the U data bearers.

In some possible implementations, the first apparatus is a user plane function network element (for example, a UPF), and the second apparatus is an access network device, for example, an access network device managed by the gateway device. The following describes S601 to S603 in this manner.

In S601, the gateway device may obtain the first configuration information from the core network device (for example, an AMF). For example, after the terminal initiates, to a network side, a request for establishing a PDU session associated with the second network slice, a serving core network device of the terminal may send the first configuration information to the gateway device. After receiving the first configuration information, the gateway device may establish the U data bearers. The U data bearers may be unidirectional data bearers from the gateway device to the UPF, or may be bidirectional data bearers between the gateway device and the UPF. The U data bearers may be for transmitting the data of the second network slice.

In S602, the gateway device configures the transport layer configurations of the V data bearers to obtain the second configuration information, and sends the second configuration information to the access network device. Optionally, after obtaining the first configuration information, the gateway device may configure the transport layer configurations of the V data bearers to obtain the second configuration information, and send the second configuration information to the access network device.

Optionally, after receiving the second configuration information, the access network device may establish the V data bearers. The V data bearers may be unidirectional data bearers from the access network device to the gateway device, or may be bidirectional data bearers between the access network device and the gateway device. The V data bearers may be for transmitting the data of the second network slice.

In S603, the gateway device receives the data of the second network slice from the access network device through the V data bearers, and sends the data of the second network slice to the UPF through the U data bearers.

Optionally, when the first apparatus is a user plane function network element, and the second apparatus is an access network device, U is greater than or equal to V.

In some other possible implementations, the first apparatus is an access network device, for example, an access network device managed by the gateway device, and the second apparatus is a user plane function network element (for example, a UPF). The following describes S601 to S603 in this manner.

In S601, the gateway device may obtain the first configuration information from the access network device. For example, the access network device may send the first configuration information to the gateway device in a PDU session resource setup response message. After receiving the first configuration information, the gateway device may establish the U data bearers. The U data bearers may be unidirectional data bearers from the gateway device to the access network device, or may be bidirectional data bearers between the gateway device and the access network device. The U data bearers may be for transmitting the data of the second network slice.

In S602, the gateway device configures the transport layer configurations of the V data bearers to obtain the second configuration information, and sends the second configuration information to the UPF. Optionally, after obtaining the first configuration information, the gateway device may configure the transport layer configurations of the V data bearers to obtain the second configuration information, and send the second configuration information to the UPF.

Optionally, after receiving the second configuration information, the UPF may establish the V data bearers. The V data bearers may be unidirectional data bearers from the UPF to the gateway device, or may be bidirectional data bearers between the UPF and the gateway device. The V data bearers may be for transmitting the data of the second network slice.

In S603, the gateway device receives the data of the second network slice from the UPF through the V data bearers, and sends the data of the second network slice to the access network device through the U data bearers.

Optionally, when the first apparatus is an access network device, and the second apparatus is a user plane function network element, U is less than or equal to V.

In some implementations, the U data bearers are bidirectional data bearers between the first apparatus and the gateway device, and the V data bearers are bidirectional data bearers between the second apparatus and the gateway device. In this case, S603 may be replaced with: The gateway device receives the data of the second network slice from the second apparatus through the V data bearers, and sends the data of the second network slice to the first apparatus through the U data bearers; and/or the gateway device receives the data of the second network slice from the first apparatus through the U data bearers, and sends the data of the second network slice to the second apparatus through the V data bearers.

According to the method shown in FIG. 6, the gateway device may transmit the data of the second network slice between the first apparatus and the second apparatus, to avoid or reduce a case in which the data of the second network slice cannot be transmitted between the first apparatus and the second apparatus in a case of IP unreachability between the first apparatus and the second apparatus, thereby improving user experience of the terminal, and improving reliability and stability of transmission of the data of the second network slice between the first apparatus and the second apparatus when uplink transmission and downlink transmission are unreliable.

In addition, when the first apparatus is an access network device, and the second apparatus is a user plane function network element, because the gateway device may communicate with a plurality of UPFs, if the plurality of UPFs jointly provide a downlink service of the second network slice, the gateway device may transmit data of the second network slice between the plurality of UPFs and the access network device by using the method shown in FIG. 6. In this way, data transmission efficiency on a core network side can be improved, and sending of transport layer configurations of the plurality of UPFs from the gateway device to the access network device can be prevented or minimized, thereby reducing signaling overheads between the gateway device and the access network device.

An embodiment of this application provides yet another communication method. FIG. 7 is a schematic flowchart corresponding to a communication method according to an embodiment of this application. An access network device is, for example, a home base station, a gateway device may be an access network gateway device, for example, a home base station gateway, and a core network device is, for example, an AMF and a UPF. As shown in FIG. 7, the method includes the following steps.

**S701:** A first core network device sends ninth information to the gateway device, and correspondingly, the gateway device receives the ninth information from the first core network device.

Optionally, the first core network device may be a core network device that currently provides a service of a third network slice for a terminal, and includes a first mobility management function network element and a second user plane function network element. When resources/a resource used by the first mobility management function network element and/or the second user plane function network element to provide the service of the third network slice for the terminal are/is overloaded, or when the first mobility management function network element and/or the second user plane function network element are/is faulty, the first mobility management function network element may send the ninth information to the gateway device.

The ninth information may indicate that the resource for providing the service of the third network slice for the terminal is overloaded or faults occur. For example, if a value of the ninth information is a fourth value (for example, 0 or 1), it indicates that the resource for providing the service of the third network slice for the terminal is overloaded, or a network element (for example, the first mobility management function network element and/or the second user plane function network element) that provides the service of the third network slice for the terminal is faulty. For another example, the ninth information includes indication information (for example, an identifier or an IP address of the first mobility management function network element) of the first mobility management function network element, indicating that the resource used by the first mobility management function network element to provide the service of the third network slice for the terminal is overloaded or that the first mobility management function network element is faulty. For another example, the ninth information includes indication information (for example, an identifier or an IP address of the second user plane function network element) of the second user plane function network element, indicating that the resource used by the second user plane function network element to provide the service of the third network slice for the terminal is overloaded or that the second user plane function network element is faulty. For another example, the ninth information includes indication information of the first mobility management function network element and indication information of the second user plane function network element, indicating that both the resources used by the first mobility management function network element and the second user plane function network element to provide the service of the third network slice for the terminal are overloaded or that both the first mobility management function network element and the second user plane function network element are faulty. For another example, the ninth information directly indicates that resource overload occurs in the first core network device for the service of the third network slice or that the first core network device is faulty.

The ninth information may be carried in a conventional message (for example, overload start (overload start)), or may be carried in a new message.

S702: The gateway device determines that a fourth core network device provides a service of the third network slice for the terminal. The fourth core network device supports the third network slice.

For example, the fourth core network device may include a second mobility management function network element and a first user plane function network element.

In some examples, the ninth information indicates that the resource used by the first mobility management function network element in the first core network device to provide the service of the third network slice for the terminal is overloaded or that the first mobility management function network element is faulty. After receiving the ninth information, the gateway device may determine that the fourth core network device provides a control plane service of the third network slice for the terminal. The fourth core network device is different from the first core network device, and the fourth core network device supports the third network slice. For example, the gateway device may determine, based on an identifier of the third network slice and a network slice list supported by the fourth core network device, that the fourth core network device provides the service of the third network slice for the terminal. For example, if the network slice list supported by the fourth core network device includes the identifier of the third network slice, the gateway device may determine that the second mobility management function network element in the fourth core network device provides the control plane service of the third network slice for the terminal. Optionally, a data service of the third network slice specific to the terminal may alternatively be provided by the first user plane function network element in the fourth core network device, or may still be provided by the second user plane function network element in the first core network device.

In some other examples, the ninth information indicates that the resource used by the second user plane function network element in the first core network device to provide the service of the third network slice for the terminal is overloaded or that the second user plane function network element is faulty. After receiving the ninth information, the gateway device may determine that the fourth core network device provides a data plane service of the third network slice for the terminal. The fourth core network device is different from the first core network device, and the fourth core network device supports the third network slice. For example, the gateway device may determine, based on an identifier of the third network slice and a network slice list supported by the fourth core network device, that the fourth core network device provides the service of the third network slice for the terminal. For example, if the network slice list supported by the fourth core network device includes the identifier of the third network slice, the gateway device may determine that the first user plane function network element in the fourth core network device provides the data plane service of the third network slice for the terminal. Optionally, the control plane service of the third network slice specific to the terminal may alternatively be provided by the second mobility management function network element, or may still be provided by the first mobility management function network element in the first core network device.

In still some other examples, if the ninth information indicates that the resources for the third network slice in the first mobility management function network element and the second user plane function network element in the first core network device are both overloaded, or that both the first mobility management function network element and the second user plane function network element are faulty, the gateway device may determine that the first user plane function network element and the second mobility management function network element in the fourth network device provide the service of the third network slice for the terminal.

According to the method shown in FIG. 7, when the resource for providing the service of the third network slice for the terminal is overloaded or the network element that provides the service of the third network slice for the terminal is faulty, the gateway device may determine that the fourth core network device provides the service of the third network slice for the terminal. In this way, the terminal can still obtain the service of the third network slice, thereby avoiding or reducing interruption of the service of the third network slice provided for the terminal.

In some possible implementations, the method shown in FIG. 7 further includes step K1.

**Step K1:** The gateway device sends a context of the terminal to the fourth core network device, and correspondingly, the fourth core network device receives the context of the terminal from the gateway device.

The context may be for triggering registration of the third network slice with the fourth core network device. In other words, after receiving the context, the fourth core network device may register the third network slice for the terminal. The context may be carried in a conventional message, or may be carried in a new message.

For example, the gateway device may send the context of the terminal to the second mobility management function network element in the fourth core network device. After receiving the context, the second mobility management function network element may register the third network slice for the terminal.

According to the method, the fourth core network device can register the third network slice for the terminal, to provide the service of the third network slice for the terminal.

In some possible implementations, the method shown in FIG. 7 further includes step L1.

**Step L1:** The fourth core network device sends third configuration information to the gateway device; and correspondingly, the gateway device receives the third configuration information from the fourth core network device.

The third configuration information indicates a transport layer configuration of a data bearer of the first user plane function network element in the fourth core network device. For example, the third configuration information includes a TNL address and/or a TEID for a GTP-U tunnel of the data bearer of the first user plane function network element connected to the second mobility management function network element. The third configuration information may be carried in a conventional message (for example, a PDU session resource setup request or a PDU session resource modify request (PDU session resource modify request)), or may be carried in a new message.

In some examples, the fourth core network device may send the third configuration information to the gateway device through a connection between the fourth core network device (for example, the second mobility management function network element therein) and the gateway device. In some other examples, the fourth core network device (for example, the second mobility management function network element therein) may send the third configuration information to the gateway device via the first core network device (for example, the first mobility management function network element therein). For example, after the fourth core network device sends the third configuration information to the first core network device, the first core network device (for example, the first mobility management function network element therein) sends the third configuration information to the gateway device.

In some implementations, after receiving the third configuration information, the gateway device may send the third configuration information to the access network device. Then, the access network device may establish a data bearer 1 based on the third configuration information. The data bearer 1 may be a unidirectional data bearer from the access network device to the first user plane function network element, or a bidirectional data bearer between the access network device and the first user plane function network element. Then, the access network device and the first user plane function network element may transmit data of the third network slice through the data bearer 1.

In some other implementations, after receiving the third configuration information, the gateway device may send fourth configuration information to the access network device. The fourth configuration information indicates a transport layer configuration of a data bearer of the gateway device. The data bearer of the gateway device indicated by the fourth configuration information may be one or more data bearers. For specific content of the fourth configuration information, refer to the second configuration information in S602. The only differences are that the second configuration information is replaced with the fourth configuration information and the V data bearers of the gateway device are replaced with the data bearer of the gateway device. Optionally, in this implementation, after receiving the third configuration information, the gateway device may establish a data bearer 2. The data bearer 2 may be a unidirectional data bearer from the gateway device to the first user plane function network element, or a bidirectional data bearer between the gateway device and the first user plane function network element. After receiving the fourth configuration information, the access network device may establish a data bearer 3. The data bearer 3 may be a unidirectional data bearer from the access network device to the gateway device, or a bidirectional data bearer between the access network device and the gateway device. In this way, the gateway device can transmit the data of the third network slice between the access network device and the first user plane function network element through the data bearer 2 and the data bearer 3.

Optionally, the third configuration information may be triggered by the context of the terminal. In other words, after obtaining the context, the fourth core network device may send the third configuration information to the gateway device. The following describes a manner in which the fourth core network device obtains the context of the terminal.

In some possible implementations, the context of the terminal may be obtained by the second mobility management function network element in the fourth core network device from the first mobility management network element in the first core network device.

In some other possible implementations, before step L1, the method shown in FIG. 7 further includes step L2.

**Step L2:** The gateway device sends a context of the terminal to the fourth core network device, and correspondingly, the fourth core network device receives the context of the terminal from the gateway device.

For specific content of step L2, refer to step K1. Details are not described herein again.

According to the method, the fourth core network device can indicate, to the gateway device, the transport layer configuration of the data bearer of the first user plane function network element. In this way, data of the third network slice can be transmitted by using the data bearer, thereby avoiding or reducing impact on data transmission of the third network slice.

In some possible implementations, the method shown in FIG. 7 further includes step M1.

**Step M1:** The gateway device sends tenth information to the terminal, and correspondingly, the terminal receives the tenth information from the gateway device.

The tenth information is for triggering setup of a NAS connection between the terminal and the fourth core network device (for example, the second mobility management function network element therein). Optionally, the tenth information is for triggering establishment of a PDU session between the terminal and the fourth core network device (for example, the second mobility management function network element therein), to trigger setup of the NAS connection between the terminal and the fourth core network device (for example, the second mobility management function network element therein). For example, if a value of the tenth information is a fifth value (for example, 0 or 1), it indicates that the NAS connection between the terminal and the fourth core network device (for example, the second mobility management function network element therein) needs to be set up. After receiving the tenth information, the terminal may set up the NAS connection between the terminal and the fourth core network device (for example, the second mobility management function network element therein).

According to the method, the gateway device sends the tenth information to the terminal, to set up the NAS connection between the terminal and the fourth core network device (for example, the second mobility management function network element therein). In this way, the fourth core network device (for example, the second mobility management function network element therein) may provide the service of the third network slice for the terminal through the NAS connection.

It should be understood that step K1, step L1, and step M1 may be used separately, or may be combined with each other. For example, the method shown in FIG. 7 may include step K1 and step L1. For another example, the method shown in FIG. 7 may include step L1 and step M1.

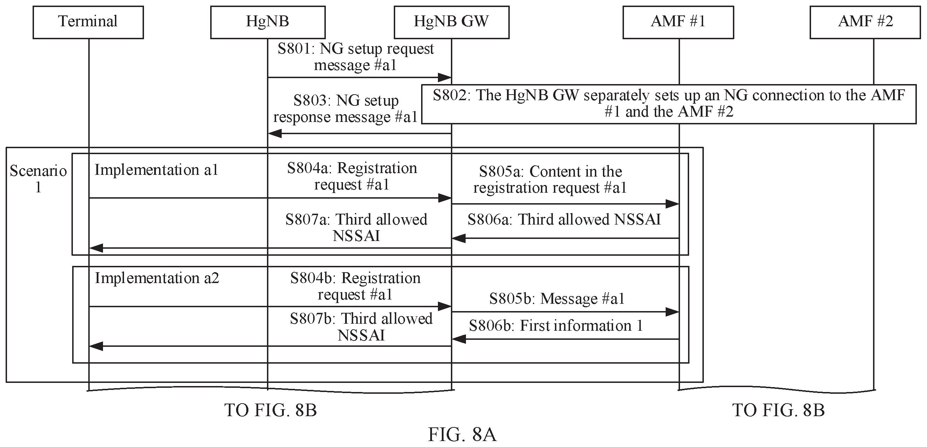

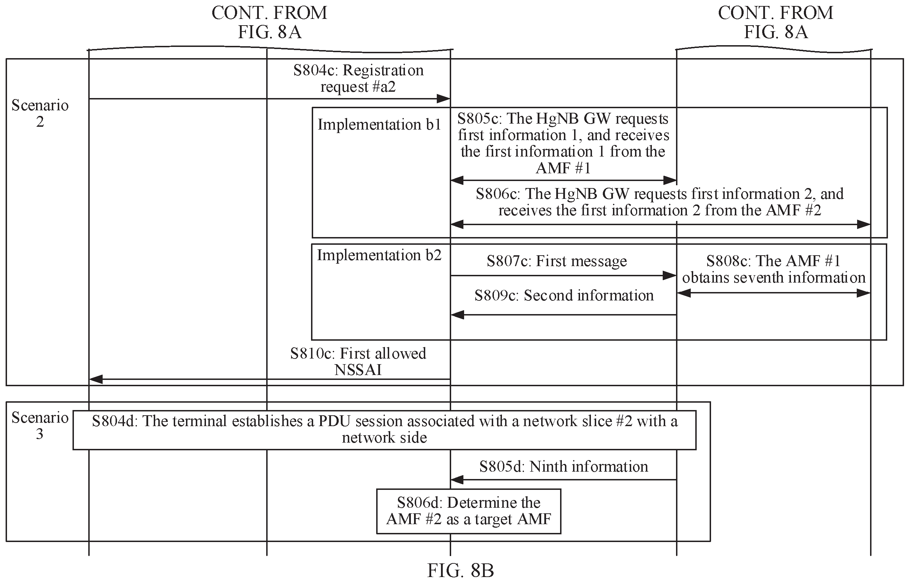

FIG. 8A and FIG. 8B are a diagram of yet another communication method according to an embodiment of this application. The method shows a possible implementation of the method shown in FIG. 3 or FIG. 7. In the method, a gateway device may select a serving core network device for a terminal. The following specifically describes a procedure of the method by using an example in which a first access network device is an AMF #1, a third access network device is an AMF #2, the gateway device is an HgNB GW, and an access network device is an HgNB. The method includes the following steps.

S801: The HgNB sends an NG setup request message #a1 to the HgNB GW.

The NG setup request message #a1 may be for requesting to set up an NG connection between the HgNB and the HgNB GW. Optionally, the NG setup request message #a1 may include information about the HgNB, and the information about the HgNB may include at least one of the following: a TAC supported by the HgNB, a PLMN, and a network slice list (slice list) supported by the HgNB. For example, the network slice list is, for example, {an identifier of a network slice #1, an identifier of a network slice #2, an identifier of a network slice #3}.

S802: The HgNB GW separately sets up an NG connection to the AMF #1 and the AMF #2.

For example, the HgNB GW may request to set up the NG connection to the AMF #1 by sending an NG setup request message #a2 to the AMF #1. Then, the AMF #1 may send an NG setup response (NG setup response) message #a2 to the HgNB GW. The NG setup response message #a2 may include information about the AMF #1. The information about the AMF #1 may include at least one of the following: a served GUAMI list (served GUAMI list) of the AMF #1, a relative AMF capacity (relative AMF capacity) of the AMF #1, and a PLMN support list (PLMN support list) of the AMF #1. The PLMN support list includes a PLMN and a network slice list that are supported by the AMF #1. The network slice list supported by the AMF #1 is, for example, {the identifier of the network slice #1, the identifier of the network slice #2}.

The HgNB GW may request to set up an NG connection to the AMF #2 by sending an NG setup request message #a3 to the AMF #2. Then, the AMF #2 may send an NG setup response message #a3 to the HgNB GW, and the NG setup response message #a3 may include information about the AMF #2. The information about the AMF #2 may include at least one of the following: a served GUAMI list of the AMF #2, a relative AMF capacity of the AMF #2, and a PLMN support list supported by the AMF #2. The network slice list supported by the AMF #2 is, for example, {the identifier of the network slice #2, the identifier of the network slice #3}.

Optionally, if the HgNB GW obtains information about a plurality of HgNBs, the HgNB GW may integrate the information about the plurality of HgNBs to obtain integrated information 1, and separately send the integrated information 1 to the AMF #1 and the AMF #2. The following describes the integrated information 1 by using an example in which the plurality of HgNBs include an HgNB #1 and an HgNB #2.

In some examples, the integrated information 1 may be HgNB set information (HgNB set information). Table 1 shows an example of the HgNB set information.

**Table 1**

| HgNB set information | |
|---|---|
| > Node identifier of the HgNB #1 | |
| | > TAC #1 |
| | > PLMN #1 |
| | > Network slice list #1 |
| > Node identifier of the HgNB #2 | |
| | > TAC #2 |
| | > PLMN #1 |
| | > Network slice list #2 |

In some other examples, the integrated information 1 may include information in each piece of HgNB information. For example, information about the HgNB #1 includes a TAC #1, a PLMN #1, and a network slice list #1, and the network slice list #1 includes the identifier of the network slice #1. Information about the HgNB #2 includes a TAC #2, a PLMN #1, and a network slice list #2, and the network slice list #2 includes the identifier of the network slice #2. Table 2 shows an example of the integrated information #1.

**Table 2**

| Integrated information #1 | |
|---|---|
| > RAN node identifier (determined by the HgNB GW) | |
| | > TAC #1 and TAC #2 |
| | > PLMN #1 |
| | > Network slice list #3: {the identifier of the network slice #1, the identifier of the network slice #2} |

S803: The HgNB GW sends an NG setup response message #a1 to the HgNB.

In some possible implementations, the NG setup response message #a1 may include the information about the AMF #1 and the information about the AMF #2. In some examples, the HgNB GW may directly forward the information about the AMF #1 and the information about the AMF #2 to the HgNB. The information about the AMF #1 and the information about the AMF #2 may be carried in a plurality of messages (for example, a plurality of pieces of NGAP signaling, where the plurality of pieces of NGAP signaling are, for example, a plurality of NG setup response messages #a1). In some other examples, the HgNB GW may integrate the information about the AMF #1 and the information about the AMF #2 into AMF set information (AMF set information), and send the AMF set information to the HgNB by using a message (for example, NGAP signaling, where the NGAP signaling is, for example, the NG setup response message #a1). Table 3 shows an example of the AMF set information.

**Table 3**

| AMF set information | |
|---|---|
| > AMF #1 | |
| | > Served GUAMI list #1 |
| | > Relative AMF capacity #1 |
| | > PLMN support list #1 (including a PLMN #1 and a network slice list #4 supported by the AMF #1) |
| > AMF #2 | |
| | > Served GUAMI list #2 |
| | > Relative AMF capacity #2 |
| | > PLMN support list #2 (including a PLMN #2 and a network slice list #5 supported by the AMF #2) |

In some other possible implementations, the NG setup response message #a1 may include integrated information #2, and the integrated information #2 may be integrated information of information about the AMF #1 and information about the AMF #2. In other words, the HgNB GW integrates information about a plurality of AMFs and sends integrated information to the HgNB. For example, the HgNB GW may combine all types of information in the information about the plurality of AMFs to obtain the integrated information #2. A type of information in information about an AMF may include at least one of the following: a served GUAMI list, a relative AMF capacity, a supported TAC, a PLMN, or a network slice list. For example, if the AMF #1 supports the PLMN #1 and a corresponding supported network slice list is {the identifier of the network slice #1, the identifier of the network slice #2}, and the AMF #2 supports the PLMN #1 and a corresponding supported network slice list is {the identifier of the network slice #2, the identifier of the network slice #3}, in the integrated information #2, the network slice list supported by the PLMN #1 is {the identifier of the network slice #1, the identifier of the network slice #2, the identifier of the network slice #3}. Table 4 shows a possible example of the integrated information #2.

**Table 4**

| Integrated information #2 | |
|---|---|
| > AMF identifier (determined by the HgNB GW) | |
| | > Served GUAMI list (determined by the HgNB GW) |
| | > Relative AMF capacity (determined by the HgNB GW) |
| | > PLMN support list (including the supported PLMN #1 and {the identifier of the network slice #1, the identifier of the network slice #2, the identifier of the network slice #3}) |

Optionally, in S801 to S803, both the NG connection between the HgNB and the HgNB GW and the NG connection between the HgNB GW and the AMF may be terminated at the HgNB GW.

In some implementations, the method shown in FIG. 8A and FIG. 8B may be applied to the following scenario 1 to scenario 3. In different scenarios, steps after S803 in the method shown in FIG. 8A and FIG. 8B are different. The following separately describes the steps.

**Scenario 1:** The terminal requests a service of the network slice #1, that is, requested NSSAI includes the identifier of the network slice #1.

In the scenario 1, after S803, the method shown in FIG. 8A and FIG. 8B may include an implementation a1 and an implementation a2.

### Implementation a1:

In the implementation a1, a termination mode of NAS signaling of the terminal may be the foregoing termination mode 1. In other words, the HgNB GW relays terminal-related signaling. The implementation a1 includes steps S804a to S807a.

S804a: The terminal sends a registration request #a1 to the HgNB GW, where requested NSSAI in the registration request #a1 includes the identifier of the network slice #1.

For specific content of S804a, refer to S301. The only differences are that the first request is replaced with the registration request #a1, and the M network slices are replaced with the network slice #1. Repeated content is not described again.

In some possible implementations, when the terminal sends the registration request #a1 to the HgNB GW via the HgNB, the HgNB may perform the following operation 1 or operation 2:
Operation 1: After receiving the registration request #a1 from the terminal, the HgNB sends NGAP signaling (for example, an initial UE message (initial UE message)) that includes the registration request #a1 and the requested NSSAI to the HgNB GW. The registration request #a1 may be included in a NAS message in the NGAP signaling, and the requested NSSAI may be directly included in the NGAP signaling. In this way, the gateway device may obtain the requested NSSAI in the NGAP signaling, and determine the AMF #1 based on a network slice identifier and AMF information in the requested NSSAI. For a determining manner, refer to the foregoing manner c2. Details are not described herein again.
Operation 2: After receiving the registration request #a1 from the terminal, the HgNB may determine the AMF #1 based on AMF information and a network slice identifier in the requested NSSAI. For a determining manner, refer to the manner c1. Details are not described herein again. Then, the HgNB may send NGAP signaling (for example, an initial UE message) that includes the registration request #a1 and indication information (for example, an identifier or an IP address of the AMF #1) of the AMF #1 to the HgNB GW. The registration request #a1 may be included in a NAS message in the NGAP signaling, and the indication information of the AMF #1 may be directly included in the NGAP signaling. In this way, the gateway device may determine the AMF #1 based on the indication information of the AMF #1.

S805a: The HgNB GW sends content in the registration request #a1 to the AMF #1.

For example, in S804a, the registration request #a1 is included in the initial UE message, and the HgNB GW may send content in the initial UE message to the AMF #1. For example, the HgNB GW may relay the initial UE message to the AMF #1.

S806a: The AMF #1 sends third allowed NSSAI to the HgNB GW, where the third allowed NSSAI includes the identifier of the network slice #1.

For a manner of determining the third allowed NSSAI by the AMF #1, refer to the manner of determining the second allowed NSSAI by the first core network device in the manner b3. The only difference is that the second allowed NSSAI is replaced with the third allowed NSSAI. Details are not described herein again.

Optionally, the third allowed NSSAI may be carried in the NGAP signaling (for example, an initial context setup request (initial context setup request)).

In some implementations, the AMF #1 may further send a first identifier of the terminal to the HgNB, and the first identifier may be a UE NGAP ID assigned by the AMF #1 to the terminal. The first identifier and the third allowed NSSAI may be carried in a same message, or may be carried in different messages.

S807a: The HgNB GW sends the third allowed NSSAI to the terminal.

For specific content of S807a, refer to S303. The sole change is that the third allowed NSSAI is replaced with the first allowed NSSAI. Repeated content is not described again.

In some examples, in S806a, the third allowed NSSAI is carried in the initial context setup request, and the HgNB GW may send content in the initial context setup request to the terminal. For example, the HgNB GW sends or relays the initial context setup request to the HgNB. Then, the HgNB sends the content in the initial context setup request to the terminal.

Optionally, the HgNB GW further sends the first identifier of the terminal and a second identifier of the terminal to the terminal. The second identifier may be a UE NGAP ID assigned by the HgNB GW to the terminal. The first identifier, the second identifier, and the third allowed NSSAI may be carried in a same message, or may be carried in different messages.

In some possible implementations, in the implementation a1, the terminal may establish, with the AMF #1, a PDU session #a1 associated with the network slice #1, to set up a NAS connection between the terminal and the AMF #1. For example, in S804a, the terminal requests to establish the PDU session #a1 associated with the network slice #1. If UP data of the PDU session #a1 is provided by a UPF #1, in S806a, the AMF #1 may further send configuration information #a1 to the HgNB GW, where the configuration information #a1 indicates a transport layer configuration of a data bearer that is of the UPF #1 and that is for transmitting uplink UP data. For specific content of the configuration information #a1, refer to the first configuration information in S601. The only difference is that the first apparatus is replaced with the UPF #1. Optionally, the configuration information #a1 may be carried in the NGAP signaling (for example, the initial context setup request or a PDU session resource setup request (PDU session resource setup request)). Then, the HgNB GW may send the configuration information #a1 to the terminal, so that the terminal establishes the PDU session #a1 accordingly.

In some possible implementations, the implementation a1 is applicable to a scenario in which the termination mode of the NAS signaling of the terminal is a termination mode 2. In this case, in S804a, the HgNB may further perform any one of an operation 1 to an operation 3. Specific content of the operation 1 and the operation 2 is described in S804a above. Details are not described herein again.

Operation 3: After receiving the registration request #a1 from the terminal, the HgNB sends the NGAP signaling (for example, the initial UE message) including the registration request #a1 to the HgNB GW. The registration request #a1 may be included in a NAS message in the NGAP signaling. In addition, the NGAP signaling may further carry the requested NSSAI corresponding to the registration request. The requested NSSAI may be directly carried in the NGAP signaling, or may be carried in the NGAP signaling by being included in an RRC container (RRC-Container). In this way, the gateway device may obtain the requested NSSAI in a NAS message, an NGAP message, or an RRC message, and determine the AMF #1 based on a network slice identifier and AMF information in the requested NSSAI. For a determining manner, refer to the foregoing manner c2. Details are not described herein again.

Optionally, in S806a, the AMF #1 may further send indication information #a1 to the HgNB GW, where the indication information #a1 indicates that a NAS connection of the terminal may be terminated at the HgNB GW. In S807a, the HgNB GW may send the indication information #a1 to the terminal. Then, the terminal may set up a NAS connection to the HgNB GW and/or the AMF #1.

### Implementation a2:

In the implementation a2, a termination mode of NAS signaling of the terminal is the foregoing termination mode 2. The implementation a2 includes steps S804b to S807b.

S804b: The terminal sends a registration request #a1 to the HgNB GW, where requested NSSAI in the registration request #a1 includes the identifier of the network slice #1.

For specific content of S804b, refer to S804a. Details are not described herein again.

S805b: The HgNB GW sends a message #a1 to the AMF #1, where the message #a1 is for requesting first information 1.

S806b: The AMF #1 sends the first information 1 to the HgNB GW.

In some possible implementations, the first information 1 includes first subscription information 1 of the terminal. For specific content of the first subscription information 1, refer to the manner b1. Details are not described herein again. In this case, for specific content of S805b and S806b, refer to the manner b1. Then, the HgNB GW may determine third allowed NSSAI based on the first subscription information 1. Optionally, the HgNB GW may determine the third allowed NSSAI based on the following information: the first subscription information 1, the identifier of the network slice #1, the network slice list supported by the AMF #1, and the network slice list supported by the HgNB. For example, the third allowed NSSAI is obtained by obtaining an intersection set of the requested NSSAI (including the identifier of the network slice #1), a network slice that the terminal subscribes to, the network slice list supported by the AMF #1, and a network slice list supported by a TA in which the terminal is located. The network slice that the terminal subscribes to includes a network slice that the terminal subscribes to and that is indicated by the first subscription information 1. The network slice list supported by the TA in which the terminal is located is determined based on the network slice list supported by the HgNB. For example, if the first subscription information 1 includes the identifier of the network slice #1, and both the network slice list supported by the AMF #1 and the network slice list supported by the HgNB include the identifier of the network slice #1, the HgNB GW may determine that the third allowed NSSAI includes the identifier of the network slice #1.

In some other possible implementations, the first information 1 includes indication information 1, where the indication information 1 indicates whether the terminal has subscribed to the network slice #1. For specific content of the indication information 1, refer to the manner b2. Details are not described herein again. In this case, for specific content of S805b and S806b, refer to the manner b2. Then, the HgNB GW may determine third allowed NSSAI based on the indication information 1. Optionally, the HgNB GW may determine the third allowed NSSAI based on the following information: the indication information 1, the identifier of the network slice #1, the network slice list supported by the AMF #1, and the network slice list supported by the HgNB. For example, the third allowed NSSAI is obtained by obtaining an intersection set of the requested NSSAI (including the identifier of the network slice #1), a network slice that the terminal subscribes to, the network slice list supported by the AMF #1, and a network slice list supported by a TA in which the terminal is located. The network slice that the terminal subscribes to includes a network slice that the terminal subscribes to and that is indicated by the indication information 1. The network slice list supported by the TA in which the terminal is located is determined based on the network slice list supported by the HgNB. For example, if the indication information 1 indicates that the terminal has subscribed to the network slice #1, and both the network slice list supported by the AMF #1 and the network slice list supported by the HgNB include the identifier of the network slice #1, the HgNB GW may determine that the third allowed NSSAI includes the identifier of the network slice #1.

In some possible implementations, in S805b and S806b, the HgNB GW and the AMF #1 may communicate with each other by using NGAP signaling (for example, one or more of an initial UE message, an initial context setup request message, and a PDU session resource setup request message). The NGAP signaling transmitted between the HgNB GW and the AMF #1 may include a terminal identifier assigned by the HgNB GW to the terminal. For specific content of the identifier, refer to the term explanation part. Details are not described herein again.

In some other possible implementations, in S805b and S806b, the HgNB GW and the AMF #1 may reuse an interface between AMFs for communication.

S807b: The HgNB GW sends the third allowed NSSAI to the terminal.

For specific content of S807b, refer to S807a. Repeated content is not described again.

Optionally, the third allowed NSSAI may be carried in a NAS message. In this way, when the HgNB GW sends the third allowed NSSAI to the terminal via the HgNB, the NAS message may be transparently transmitted to the terminal via the HgNB. In this case, a NAS connection of the terminal is terminated at the HgNB GW. For the HgNB, the HgNB GW may be considered as an AMF, and the NGAP signaling sent by the HgNB GW to the HgNB may not include an identifier (for example, a UE NGAP ID) assigned by the AMF #1 to the terminal.

In some implementations, the HgNB GW may send indication information #a2 to the terminal, where the indication information #a2 indicates that the NAS connection of the terminal may be terminated at an AMF. Then, the terminal may set up a NAS connection to the HgNB GW and/or the AMF #1. It should be understood that the indication information #a2 and the third allowed NSSAI may be carried in a same message, or may be carried in different messages.

In some possible implementations, when the termination mode of the NAS signaling of the terminal is the termination mode 2, the terminal may set up a PDU session associated with the network slice #1 with the AMF #1 and/or the HgNB GW, to set up the NAS connection between the terminal and the AMF #1 and/or the HgNB GW. For a manner in which the terminal establishes the PDU session associated with the network slice #1 with the AMF #1, refer to the implementation a1. Details are not described herein again. For a manner in which the terminal establishes a PDU session #a2 associated with the network slice #1 with the HgNB GW, refer to S601 and S602. The gateway device establishes the U data bearers based on the first configuration information, and the terminal establishes the V data bearers based on the second configuration information, thereby setting up the PDU session #a2.

The scenario 1 is described by using an example in which the terminal requests a service of a network slice. It should be understood that the method in the scenario 1 is also applicable to a case in which the terminal requests services of a plurality of network slices, and the plurality of network slices may be supported by one AMF (for example, the AMF #1).

**Scenario 2:** The terminal requests services of the network slice #1 and the network slice #3, that is, requested NSSAI includes the identifiers of the network slice #1 and the network slice #3.

In some possible implementations, in the scenario 2, after S803, the method shown in FIG. 8A and FIG. 8B may include S804c to S810c.

S804c: The terminal sends a registration request #a2 to the HgNB GW, where requested NSSAI in the registration request #a2 includes the identifiers of the network slice #1 and the network slice #3.

For specific content of S804c, refer to S301. The only differences are that the first request is replaced with the registration request #a2, and the M network slices are replaced with the network slice #1 and the network slice #3. Repeated content is not described again.

Optionally, when the terminal sends the registration request #a2 to the HgNB GW via the HgNB, the HgNB may perform any one of the following operation 1 to operation 3. For specific content of the operation 1 to the operation 3, refer to S804a. Details are not described herein again.

After S804c, the method shown in FIG. 8A and FIG. 8B further includes an implementation b1 or an implementation b2.

Implementation b1: The HgNB GW separately communicates with the AMF #1 and the AMF #2.

The implementation b1 includes S805c and S806c.

S805c: The HgNB GW requests first information 1 from the AMF #1, and receives the first information 1 from the AMF #1.

S806c: The HgNB GW requests first information 2 from the AMF #2, and receives the first information 2 from the AMF #2.

For specific content of S805c and S806c, refer to steps A1 and A2 in the manner a1. The only differences are that the network slice 1 is replaced with the network slice #1, and the network slice 2 is replaced with the network slice #3. Repeated content is not described again.

A sequence of performing S805c and S806c is not limited in this application.

Optionally, after receiving the first information 1 and the first information 2, the HgNB GW may determine first allowed NSSAI based on the first information 1 and the first information 2. For a determining manner, refer to step A3 in the manner a1. The only difference is that the at least one piece of first information is replaced with the first information 1 and the first information 2. Details are not described herein again.

In some implementations, in the implementation b1, a core network device may not determine rejected NSSAI for the terminal, that is, does not reject a network slice requested by the terminal. For example, in S805c, if the HgNB GW sends the identifiers of the network slice #1 and the network slice #3 to the AMF #1, and the AMF #1 identifies that access of the terminal accesses is performed via the HgNB GW, even if the AMF #1 does not support the network slice #3, the AMF #1 does not reject the network slice #3 requested by the terminal.

Implementation b2: The HgNB GW communicates with the AMF #2 via the AMF #1.

The implementation b2 includes S807c to S809c.

S807c: The HgNB GW sends a first message to the AMF #1, where the first message is for requesting second information, and the second information is for determining first allowed NSSAI.

For specific content of S807c, refer to step C1. The only differences are that the network slice 1 is replaced with the network slice #1, and the network slice 2 is replaced with the network slice #3. Details are not described herein again.

S808c: The AMF #1 obtains seventh information. Specifically, the AMF #1 requests the seventh information from the AMF #2, and the AMF #2 sends the seventh information to the AMF #1.

For specific content of S808c, refer to steps C2 and C3. Details are not described herein again.

S809c: The AMF #1 sends the second information to the HgNB GW.

For specific content of S809c, refer to step C4. Details are not described herein again.

Optionally, after receiving the second information, the HgNB GW may determine the first allowed NSSAI based on the second information. For a determining manner, refer to step C5. Details are not described herein again.

After S806c or S809c, the method shown in FIG. 8A and FIG. 8B further includes the following step.

S810c: The HgNB GW sends the first allowed NSSAI to the terminal.

For specific content of S810c, refer to step C5. Details are not described herein again.

In some possible implementations, in S804c, the terminal may request to establish PDU sessions associated with the network slice #1 and the network slice #3, to set up a NAS connection from the terminal to a network side (for example, one or more of the AMF #1, the AMF #2, or the HgNB GW). Optionally, if UP data of the PDU session associated with the network slice #1 is provided by a UPF #1, the AMF #1 may further send configuration information #a1 to the HgNB GW. The configuration information #a1 indicates a transport layer configuration of a data bearer that is of the UPF #1 and that is for transmitting uplink UP data. For specific content of the configuration information #a1, refer to S806a. Details are not described herein again. If UP data of the PDU session associated with the network slice #3 is provided by a UPF #2, the AMF #2 may send configuration information #a2 to the HgNB GW, where the configuration information #a2 indicates a transport layer configuration of a data bearer that is of the UPF #2 and that is for transmitting uplink UP data. For specific content of the configuration information #a2, refer to the configuration information #a1. The only difference is that the UPF #1 is replaced with the UPF #2. Details are not described herein again. In some examples, the AMF #2 may directly send the configuration information #a2 to the HgNB GW. In some other examples, the AMF #2 may send the configuration information #a2 to the HgNB GW via the AMF #1.

Optionally, after receiving the configuration information #a1 and the configuration information #a2, the HgNB GW may indicate the HgNB to establish the PDU session associated with the network slice #1 and the PDU session associated with the network slice #3. For example, the HgNB GW may indicate, by using a PDU session resource setup request, the HgNB to establish the PDU session associated with the network slice #1 and the PDU session associated with the network slice #3. Optionally, the NAS connections of the two PDU sessions may be terminated at the HgNB GW or the core network device. For example, the NAS connection of the PDU session associated with the network slice #1 may be terminated at the HgNB GW or the AMF #1, and the NAS connection of the PDU session associated with the network slice #3 may be terminated at the HgNB GW or the AMF #2. UPs of the two PDU sessions may be terminated at a user plane function network element. For example, a UP of the PDU session associated with the network slice #1 may be terminated at the UPF #1, and a UP of the PDU session associated with the network slice #3 may be terminated at the UPF #2.

In some other possible implementations, in the scenario 2, the termination mode of the NAS signaling of the terminal is the foregoing termination mode 1. The HgNB GW relays UE-related signaling to the AMF. The HgNB GW may select only one AMF to provide a service for the terminal. For a manner in which the HgNB GW selects the AMF, refer to the manner in which the HgNB determines the first core network device in the manner a2. Details are not described herein again. The following uses an example in which the HgNB GW selects the AMF #1 to provide a service for the terminal for description. After selecting the AMF #1, the HgNB GW may provide the first allowed NSSAI for the terminal in the implementation a1. Because the network slice list supported by the AMF #1 is {the identifier of the network slice #1, the identifier of the network slice #2}, the first allowed NSSAI may include the network slice #1, and the network slice #3 may be included in the rejected NSSAI.

The scenario 2 is described by using an example in which the terminal requests services of two network slices. It should be understood that the method in the scenario 2 is also applicable to a case in which the terminal requests services of more than two network slices and there are network slices that different AMFs are allowed to provide services for the terminal in the more than two network slices.

**Scenario 3:** The terminal requests a service of the network slice #2, that is, requested NSSAI includes the identifier of the network slice #2. Resources/ A resource, in the AMF #1 and/or a UPF #1, that provide/provides a service of the network slice #2 are/is overloaded, or the AMF #1 and/or the UPF #1 are/is faulty.

In the scenario 3, after S803, the method shown in FIG. 8A and FIG. 8B may include S804d to S806d.

S804d: The terminal establishes a PDU session associated with the network slice #2 with a network side.

Optionally, after accessing a cell of the HgNB, the terminal may initiate a request for establishing the PDU session associated with the network slice #2, to establish the PDU session associated with the network slice #2.

In some possible implementations, a termination mode of NAS signaling of the terminal is the foregoing termination mode 1 or termination mode 2. The terminal may set up, to the AMF #1, a NAS connection associated with the network slice #2, to establish the PDU session associated with the network slice #2. For specific content, refer to the descriptions of "the terminal may establish, with the AMF #1, a PDU session #a1 associated with the network slice #1" in the scenario 1. Details are not described herein again.

In some other possible implementations, a termination mode of NAS signaling of the terminal is the foregoing termination mode 2. The terminal may set up, to the HgNB GW, a NAS connection associated with the network slice #2, to establish the PDU session associated with the network slice #2. For specific content, refer to the descriptions of "the terminal establishes a PDU session #a2 associated with the network slice #1 with the HgNB GW" in the scenario 1. Details are not described herein again. Optionally, in this manner, the UPF #1 may provide a UP service of the network slice #2 for the terminal.

S805d: The AMF #1 sends ninth information to the HgNB GW, where the ninth information may indicate that a resource that is for providing a service of the network slice #2 for the terminal is overloaded or that a network element (for example, the AMF #1 and/or the UPF #1) that provides a service of the network slice #2 for the terminal is faulty.

For specific content of S805d, refer to S701. The only difference is that the third network slice is replaced with the network slice #2. Details are not repeated.

S806d: The HgNB GW determines the AMF #2 as a target AMF. The target AMF is an AMF that continues to provide a service for the network slice #2 for the terminal.

For example, the HgNB GW may determine, based on the information about each AMF obtained in S802, that the AMF #2 can support the network slice #2, to determine the AMF #2 as the target AMF.

Optionally, if a plurality of AMFs support the network slice #2, the HgNB GW may further select the target AMF from the plurality of AMFs based on load of each of the plurality of AMFs. For example, the HgNB GW determines an AMF with lowest load in the plurality of AMFs as the target AMF. For example, if both the AMF #2 and the AMF #3 support the network slice #2, and load of the AMF #2 is lower than that of the AMF #3, the HgNB GW may determine the AMF #2 as the target AMF.

Optionally, after the target AMF is determined, the terminal and the network side may establish a PDU session #3 associated with the network slice #2. There may be a plurality of establishment manners, for example, a manner i1 or a manner i2.

### Manner i1:

In the manner i1, the termination mode of the NAS signaling of the terminal is the foregoing termination mode 1 or termination mode 2. The manner i1 includes step O1 to step O3.

Step O1: The HgNB GW sends a context of the terminal to the AMF #2. For specific content, refer to step K1. Details are not described herein again.

Step O2: The AMF #2 registers the network slice #2 for the terminal, and sends third configuration information to the HgNB GW, where the third configuration information indicates a transport layer configuration of an uplink UP data bearer of the UPF #2.

For specific content of step O2, refer to step L1 and step K1. Details are not described herein again.

Step O3: The terminal establishes a PDU session #a3 associated with the network slice #2 with the network side.

A NAS connection between the terminal and the AMF #2 may be triggered by the HgNB GW by using a message in a PDU session management procedure. The message in the PDU session management procedure is, for example, a PDU session resource setup request or a PDU session resource modify request.

For specific content of step O3, refer to S804d. The only difference is that the AMF #1 is replaced with the AMF #2. Details are not described herein again.

### Manner i2:

In the manner i2, the termination mode of the NAS signaling of the terminal is the foregoing termination mode 2, and the NAS connection of the terminal is terminated at the HgNB GW. The manner i2 includes step P1 to step P3.

Step P1: The HgNB GW sends a context of the terminal to the AMF #2.

Step P2: The AMF #2 registers the network slice #2 for the terminal, and sends third configuration information to the HgNB GW, where the third configuration information indicates a transport layer configuration of an uplink UP data bearer of the UPF #2.

For specific content of steps P1 and P2, refer to steps O1 and O2. Details are not described herein again.

Step P3: The HgNB GW sends the third configuration information or fourth configuration information to the HgNB. The fourth configuration information indicates a transport layer configuration of the data bearer of the gateway device.

For specific content of step P3, refer to step L1. Details are not described herein again.

For example, the HgNB GW may send the third configuration information or the fourth configuration information to the HgNB by using a PDU session resource modify request.

According to the method shown in FIG. 8A and FIG. 8B, the gateway device may support network slicing, and may determine a corresponding AMF based on the requested NSSAI. In addition, in the method, the HgNB GW may integrate information about the HgNB and/or the AMF, that is, aggregate HgNB and/or N2 interface capabilities. In addition, according to the method, the HgNB GW may communicate with a plurality of AMFs, so that a success rate and efficiency of requesting a service of a network slice by the terminal can be improved, service continuity of the network slice can be ensured, and resource utilization of a core network device can be improved.

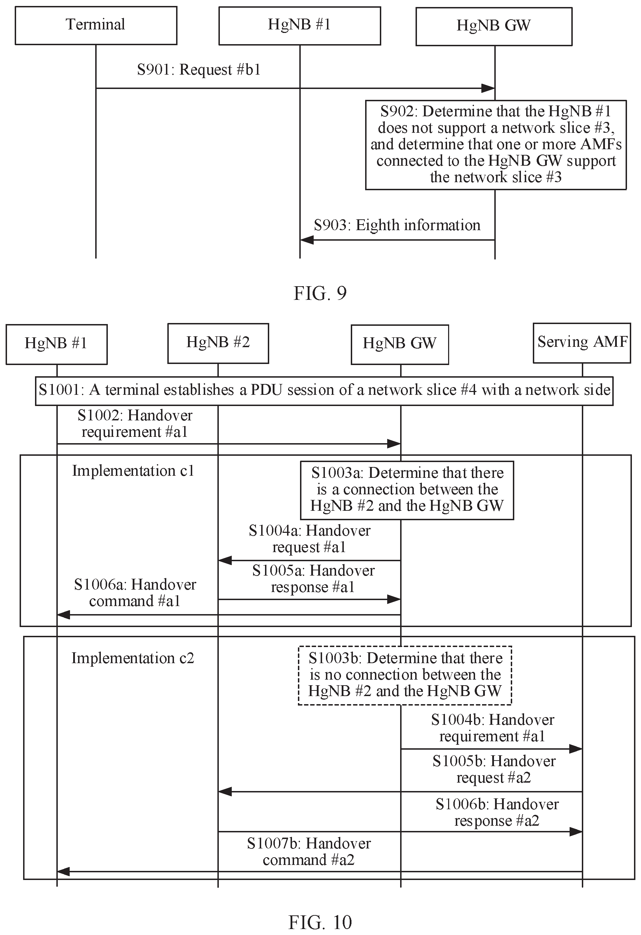

FIG. 9 is a diagram of yet another communication method according to an embodiment of this application. The method shows a possible implementation of the method shown in FIG. 4. The following specifically describes a procedure of the method by using an example in which a first access network device is an HgNB #1, a second access network device is an HgNB #2, a gateway device is an HgNB GW, and a core network device is an AMF. The method includes the following steps.

S901: A terminal sends a request #b1 to the HgNB GW.

The request #b1 is a request related to a network slice #3. For example, the request #b1 is a registration request for requesting to provide a service of the network slice #3 for the terminal. For another example, the request #b1 is for requesting to establish a PDU session associated with the network slice #3.

For specific content of S901, refer to S401. The only difference is that the second request is replaced with the request #b1. Details are not described herein again.

S902: The HgNB GW determines that the HgNB #1 does not support the network slice #3, and determines that one or more AMFs connected to the HgNB GW support the network slice #3.

For specific content of S902, refer to step J1. Details are not described herein again.

S903: The HgNB GW sends eighth information to the HgNB #1. The eighth information indicates to redirect or hand over the terminal from the HgNB #1 to the HgNB #2.

For specific content of S903, refer to S402. Details are not described herein again.

Optionally, before S903, the HgNB GW may determine the HgNB #2. For a determining manner, refer to step I1. Details are not described herein again.

For technical effects of the method shown in FIG. 9, refer to the descriptions of the technical effects of the method shown in FIG. 4. Details are not described herein again.

FIG. 10 is a diagram of yet another communication method according to an embodiment of this application. The method shows a possible implementation of the method shown in FIG. 5. In the method, for a handover procedure of a terminal in a connected state, a gateway device may send handover-related signaling to a target access network device. The following specifically describes a procedure of the method by using an example in which a first access network device is an HgNB #1, a second access network device is an HgNB #2, the gateway device is an HgNB GW, and a core network device is an AMF. The method includes the following steps.

S1001: The terminal establishes a PDU session of a network slice #4 with a network side.

For specific content of S1001, refer to S804d. The only difference is that the network slice #2 is replaced with the network slice #4. Details are not described herein again.

S1002: The HgNB #1 sends a handover requirement #a1 to the HgNB GW. The handover requirement #a1 is for requesting to hand over the terminal from the HgNB #1 to the HgNB #2.

The HgNB #1 may be a current serving access network device of the terminal. For specific content of S1002, refer to S501. The only difference is that the handover request is replaced with the handover requirement #a1. Details are not described herein again.

After S1002, the method shown in FIG. 10 may include an implementation c1 or an implementation c2.

### Implementation c1:

The implementation c1 includes S1003a to S1006a.

S1003a: The HgNB GW determines that there is a connection between the HgNB #2 and the HgNB GW.

When there is a connection between the HgNB #2 and the HgNB GW, the HgNB GW may be used as a termination point of a NAS connection of the terminal. The HgNB GW may perform mobility management on the terminal, for example, manage a handover procedure of the terminal, depending on whether an HgNB and an AMF support a network slice.

Optionally, when there is a connection between the HgNB #2 and the HgNB GW, if the terminal is handed over from the HgNB #1 to the HgNB #2 based on an Xn interface, the method may not include a path switch (Path Switch) procedure, that is, the path switch procedure does not need to be triggered.

S1004a: The HgNB GW sends a handover request #a1 to the HgNB #2, where the handover request #a1 is for requesting to hand over the terminal from the HgNB #1 to the HgNB #2.

S1005a: The HgNB #2 sends a handover response #a1 to the HgNB GW, where the handover response #a1 indicates that handover of the terminal from the HgNB #1 to the HgNB #2 is agreed upon.

S1006a: The HgNB GW sends a handover command (handover command) #a1 to the HgNB #1, where the handover command #a1 indicates to hand over the terminal from the HgNB #1 to the HgNB #2.

### Implementation c2:

The implementation c2 includes S1003b to S1007b.

S1003b: The HgNB GW determines that there is no connection between the HgNB #2 and the HgNB GW.

S1003b is an optional step.

S1004b: The HgNB GW sends the handover requirement #a1 to a serving AMF of the terminal.

S1005b: The serving AMF sends a handover request #a2 to the HgNB #2, where the handover request #a2 is for requesting to hand over the terminal from the HgNB #1 to the HgNB #2.

S1006b: The HgNB #2 sends a handover response #a2 to the serving AMF, where the handover response #a2 indicates that handover of the terminal from the HgNB #1 to the HgNB #2 is agreed upon.

S1007b: The serving AMF sends a handover command #a2 to the HgNB, where the handover command #a2 indicates to hand over the terminal from the HgNB #1 to the HgNB #2.

In some implementations, the serving AMF may send the handover command #a2 to the HgNB via the HgNB GW.

Optionally, in the method shown in FIG. 10, the HgNB GW may send, to the HgNB #2 by using a handover request and/or a path switch request response, a UE NGAP ID assigned by the serving AMF to the terminal and a UE NGAP ID assigned by the HgNB GW to the terminal.

For technical effects of the method shown in FIG. 10, refer to the descriptions of the technical effects of the method shown in FIG. 5. Details are not described herein again.

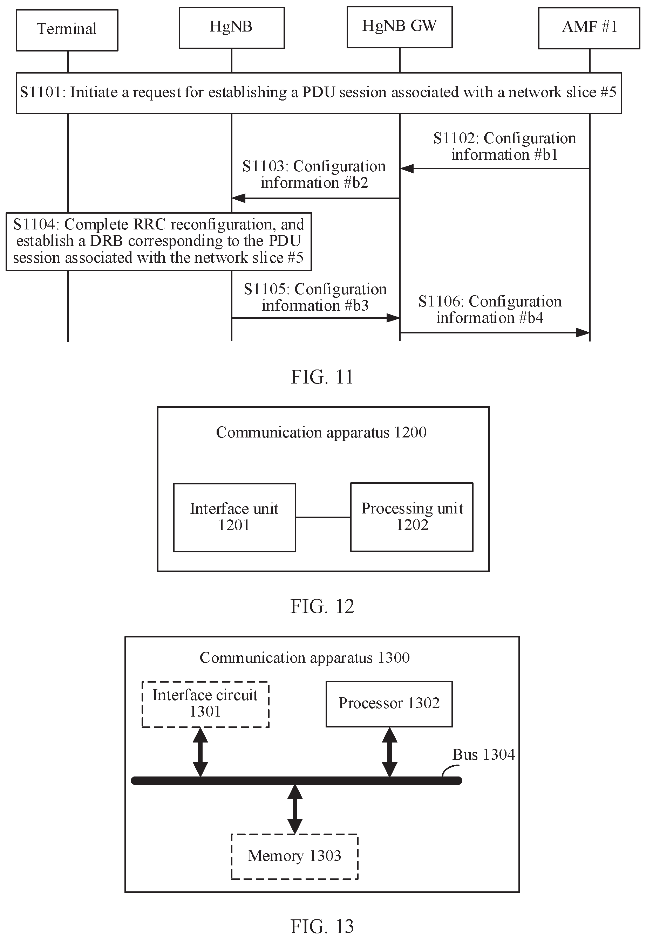

FIG. 11 is a diagram of yet another communication method according to an embodiment of this application. The method shows a possible implementation of the method shown in FIG. 6. The following specifically describes a procedure of the method by using an example in which a first access network device is an HgNB, a gateway device is an HgNB GW, and a core network device is an AMF. The method includes the following steps.

S1101: A terminal initiates a request for establishing a PDU session associated with a network slice #5.

For example, the terminal may send, to the HgNB GW, the request for establishing the PDU session associated with the network slice #5. For a sending manner, refer to the manner of sending the registration request #a1 in S804b. Details are not described herein again. Then, the HgNB GW may send, to an AMF #1, the request for establishing the PDU session associated with the network slice #5. The HgNB GW may directly send, to the AMF #1, the request for establishing the PDU session associated with the network slice #5, or may send, to the AMF #1 via another AMF, the request for establishing the PDU session associated with the network slice #5.

S1102: The AMF #1 sends configuration information #b1 to the HgNB GW, where the configuration information #b1 indicates transport layer configurations of W uplink UP data bearers that are of a UPF #1 and that are associated with the network slice #5, and W is a positive integer.

For specific content of the configuration information #b1, refer to the first configuration information in S601. For specific content of S1102, refer to S601. The only difference is that the first apparatus is replaced with the UPF #1, and the U data bearers are replaced with the W uplink UP data bearers. Details are not described herein again. In this case, an uplink UP for a service of the network slice #5 is terminated at the UPF #1.

S1103: The HgNB GW sends configuration information #b2 to the HgNB, where the configuration information #b2 indicates transport layer configurations of X uplink UP data bearers that are of the HgNB GW and that are associated with the network slice #5, and X is a positive integer.

For specific content of the configuration information #b2, refer to the second configuration information in S602. For specific content of S1103, refer to S602. The only difference is that the second apparatus is replaced with the HgNB, and the V data bearers are replaced with the X uplink UP data bearers. Details are not described herein again. In this case, an uplink UP of the HgNB is terminated at the HgNB GW.

Optionally, the HgNB GW may store the configuration information #b1, and redetermine the configuration information #b2 for the HgNB. For specific content, refer to the descriptions of obtaining the second configuration information in the method shown in FIG. 6. Details are not described herein again.

S1104: The HgNB and the terminal complete RRC reconfiguration, and establish a DRB corresponding to the PDU session associated with the network slice #5.

S1105: The HgNB sends configuration information #b3 to the HgNB GW, where the configuration information #b3 indicates transport layer configurations of Y downlink UP data bearers that are of the HgNB and that are associated with the network slice #5, and Y is a positive integer.

For specific content of the configuration information #b3, refer to the first configuration information in S601. For specific content of S1105, refer to S601. The only difference is that the first apparatus is replaced with the HgNB, and the U data bearers are replaced with the Y downlink UP data bearers. Details are not described herein again. In this case, a downlink UP for the service of the network slice #5 is terminated at the HgNB.

S1106: The HgNB GW sends configuration information #b4 to the AMF #1, where the configuration information #b4 indicates transport layer configurations of Z downlink UP data bearers that are of the HgNB GW and that are associated with the network slice #5, and Z is a positive integer.

For specific content of the configuration information #b4, refer to the second configuration information in S602. For specific content of S1106, refer to S602. The only difference is that the second apparatus is replaced with the UPF #1, and the V data bearers are replaced with the Z downlink UP data bearers. Details are not described herein again. In this case, a downlink UP of the UPF #1 is terminated at the HgNB GW.

Optionally, the HgNB GW may store the configuration information #b3, and redetermine the configuration information #b4 for the UPF #1. For specific content, refer to the descriptions of obtaining the second configuration information in the method shown in FIG. 6. Details are not described herein again.

For technical effects of the method shown in FIG. 11, refer to the descriptions of the technical effects of the method shown in FIG. 6. Details are not described herein again.

Based on a same technical concept as the foregoing method embodiments, an embodiment of this application provides a corresponding communication apparatus, having a function of performing related steps in the foregoing method embodiments. The function may be implemented by hardware, may be implemented by software, or may be implemented by hardware executing corresponding software. The hardware or the software includes one or more modules corresponding to the foregoing function. The communication apparatus may be a gateway device, may be a module (for example, a circuit or a chip) in the gateway device, or may be a logical node, a logical module, or software that can implement all or some functions of the gateway device. Alternatively, the communication apparatus may be an access network device or a module (for example, a circuit or a chip) in the access network device, or may be a logical node, a logical module, or software that can implement all or some functions of the access network device. Alternatively, the communication apparatus may be a core network device or a module (for example, a circuit or a chip) in the core network device, or may be a logical node, a logical module, or software that can implement all or some functions of the core network device.

In a possible implementation, a structure of the communication apparatus provided in this embodiment of this application is shown in FIG. 12, and the apparatus includes an interface unit 1201 and a processing unit 1202. The following describes functions of the units in the communication apparatus 1200.

The interface unit 1201 is configured to input and/or output information. Inputting information may be replaced with receiving information, and outputting information may be replaced with sending information. When outputting information, the interface unit 1201 may output the information to an apparatus other than the communication apparatus 1200, or may output the information to another unit in the communication apparatus 1200. In some implementations, the interface unit 1201 may be implemented by at least one of a physical interface, a communication module, a communication interface, and an input/output interface. In some other implementations, the interface unit 1201 may be implemented by an interface circuit, for example, a mobile communication module. The mobile communication module may include one or more of at least one antenna, at least one filter, a switch, a power amplifier, a low noise amplifier (low noise amplifier, LNA), and the like.

The processing unit 1202 may be configured to support the communication apparatus 1200 in performing a processing action in the foregoing method embodiments. The processing unit 1202 may be implemented by one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any regular processor or the like.

In an implementation, the communication apparatus 1200 is used in the gateway device in the embodiment of this application shown in FIG. 3. The following describes a specific function of the processing unit 1202 in the implementation.

The processing unit 1202 is configured to: receive a first request from a terminal via the interface unit 1201, where the first request is for requesting to provide services of M network slices for the terminal, and M is a positive integer greater than or equal to 2; determine first allowed NSSAI, where the first allowed NSSAI includes identifiers of N network slices in the M network slices, the N network slices include a network slice allowed by different core network devices to provide a service for the terminal, and N is a positive integer greater than or equal to 2 and less than or equal to M; and send the first allowed NSSAI to the terminal via the interface unit 1201.

In some possible implementations, the processing unit 1202 is further configured to: request first information from at least one core network device, where the first information is for determining the first allowed NSSAI; receive at least one piece of first information via the interface unit 1201; and determine, for the communication apparatus 1200, the first allowed NSSAI based on the at least one piece of first information.

In some other possible implementations, the processing unit 1202 is further configured to: send a first message to a first core network device via the interface unit 1201, where the first message is for requesting second information, and the second information is for determining the first allowed NSSAI; receive the second information from the first core network device via the interface unit 1201; and determine the first allowed NSSAI based on the second information.

In some implementations, the processing unit 1202 is further configured to: obtain a network slice list supported by the at least one core network device; and send, via the interface unit 1201, third information to an access network device managed by the communication apparatus 1200, where the third information indicates a first network slice list, and the first network slice list includes identifiers of all network slices supported by the at least one core network device.

In some other implementations, the processing unit 1202 is further configured to: obtain a network slice list supported by the at least one core network device; and send, via the interface unit 1201, fourth information to an access network device managed by the communication apparatus 1200, where the fourth information indicates a network slice list supported by each core network device in the at least one core network device.

In some examples, the processing unit 1202 is further configured to: obtain a network slice list supported by each tracking area TA of at least one access network device managed by the communication apparatus 1200; and send fifth information to a second core network device via the interface unit 1201, where the fifth information indicates a second network slice list, and the second network slice list includes identifiers of all network slices supported by each TA of the at least one access network device.

In some other examples, the processing unit 1202 is further configured to: obtain a network slice list supported by each TA of at least one access network device managed by the communication apparatus 1200; and send sixth information to a second core network device via the interface unit 1201, where the sixth information indicates a network slice list supported by each TA of each access network device in the at least one access network device.

In another implementation, the communication apparatus 1200 is used in the access network device in the embodiment of this application shown in FIG. 3. The following describes a specific function of the processing unit 1202 in the implementation.

The processing unit 1202 is configured to send, via the interface unit 1201, a first request from a terminal to a gateway device that manages the communication apparatus 1200, where the first request is for requesting to provide services of M network slices for the terminal, and M is a positive integer greater than or equal to 2; and receive first allowed NSSAI from the gateway device via the interface unit 1201, where the first allowed NSSAI includes N network slices in the M network slices, the N network slices include a network slice allowed by different core network devices to provide a service for the terminal, and N is a positive integer greater than or equal to 2 and less than or equal to M.

In some possible implementations, the processing unit 1202 is further configured to receive third information from the gateway device via the interface unit 1201, where the third information indicates a first network slice list, and the first network slice list includes identifiers of all network slices supported by at least one core network device.

In some other possible implementations, the processing unit 1202 is further configured to receive fourth information from the gateway device via the interface unit 1201, where the fourth information indicates a network slice list supported by each of at least one core network device.

In still another implementation, the communication apparatus 1200 is used in the core network device in the embodiment of this application shown in FIG. 3. The following describes a specific function of the processing unit 1202 in the implementation.

The processing unit 1202 is configured to receive a first message from a gateway device via the interface unit 1201, where the first message is for requesting second information, the second information is for determining first allowed NSSAI, the first allowed NSSAI includes N network slices, the N network slices belong to M network slices that request to provide a service for a terminal, the N network slices include a network slice allowed by different core network devices to provide a service for the terminal, and N is a positive integer greater than or equal to 2 and less than or equal to M; and send the second information to the gateway device via the interface unit 1201.

In some possible implementations, the processing unit 1202 is further configured to: request, in response to the first message, seventh information from a third core network device via the interface unit 1201; and determine the second information based on the seventh information.

In some examples, the processing unit 1202 is further configured to receive fifth information from the gateway device via the interface unit 1201, where the fifth information indicates a second network slice list, and the second network slice list includes identifiers of all network slices supported by each tracking area TA of at least one access network device managed by the gateway device.

In some other examples, the processing unit 1202 is further configured to receive sixth information from the gateway device via the interface unit 1201, where the sixth information indicates a network slice list supported by each TA of each access network device in at least one access network device managed by the gateway device.

For more detailed descriptions of the processing unit 1202 and the interface unit 1201, refer to related descriptions in the method embodiments shown in FIG. 3. Details are not described herein again.

It should be noted that, in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 13. The communication apparatus 1300 includes a processor 1302. Optionally, the communication apparatus 1300 further includes an interface circuit 1301 and a memory 1303. The interface circuit 1301, the processor 1302, and the memory 1303 are coupled to each other.

Optionally, the interface circuit 1301, the processor 1302, and the memory 1303 are coupled to each other through a bus 1304. The bus 1304 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 13, but this does not mean that there is only one bus or only one type of bus.

The interface circuit 1301 is configured to input and/or output information. Inputting information may be replaced with receiving information, and outputting information may be replaced with sending information. When outputting information, the interface circuit 1301 may output the information to an apparatus other than the communication apparatus 1300, or may output the information to another unit in the communication apparatus 1300. For example, the interface circuit 1301 may be implemented by at least one of a physical interface, a communication module, a communication interface, an input/output interface, and a mobile communication module. The mobile communication module may include one or more of at least one antenna, at least one filter, a switch, a power amplifier, an LNA, and the like.

The processor 1302 may be configured to support the communication apparatus 1300 in performing a processing action in the foregoing method embodiments. When the communication apparatus 1300 is configured to implement the foregoing method embodiments, the processor 1302 may be further configured to implement a function of the foregoing processing unit 1202. The processor 1302 may be a CPU, or may be another general-purpose processor, a DSP, an ASIC, an FPGA or another programmable logic device, a transistor logic device, a hardware component, or any combination thereof. The general-purpose processor may be a microprocessor or may be any regular processor or the like.

In an implementation, the communication apparatus 1300 is used in the gateway device in the embodiment of this application shown in FIG. 3. The following describes a specific function of the processor 1302 in the implementation.

The processor 1302 is configured to: receive a first request from a terminal via the interface circuit 1301, where the first request is for requesting to provide services of M network slices for the terminal, and M is a positive integer greater than or equal to 2; determine first allowed NSSAI, where the first allowed NSSAI includes identifiers of N network slices in the M network slices, the N network slices include a network slice allowed by different core network devices to provide a service for the terminal, and N is a positive integer greater than or equal to 2 and less than or equal to M; and send the first allowed NSSAI to the terminal via the interface circuit 1301.

In another implementation, the communication apparatus 1300 is used in the access network device in the embodiment of this application shown in FIG. 3. The following describes a specific function of the processor 1302 in the implementation.

The processor 1302 is configured to send, via the interface circuit 1301, a first request from a terminal to a gateway device that manages the communication apparatus 1300, where the first request is for requesting to provide services of M network slices for the terminal, and M is a positive integer greater than or equal to 2; and receive first allowed NSSAI from the gateway device via the interface circuit 1301, where the first allowed NSSAI includes N network slices in the M network slices, the N network slices include a network slice allowed by different core network devices to provide a service for the terminal, and N is a positive integer greater than or equal to 2 and less than or equal to M.

In still another implementation, the communication apparatus 1300 is used in the core network device in the embodiment of this application shown in FIG. 3. The following describes a specific function of the processor 1302 in the implementation.

The processor 1302 is configured to receive a first message from a gateway device via the interface circuit 1301, where the first message is for requesting second information, the second information is for determining first allowed NSSAI, the first allowed NSSAI includes N network slices, the N network slices belong to M network slices that request to provide a service for a terminal, the N network slices include a network slice allowed by different core network devices to provide a service for the terminal, and N is a positive integer greater than or equal to 2 and less than or equal to M; and send the second information to the gateway device via the interface circuit 1301.

For a specific function of the processor 1302, refer to the descriptions in the communication method provided in the foregoing embodiments and examples of this application, and the specific function descriptions of the communication apparatus 1200 in the embodiment of this application shown in FIG. 12. Details are not described herein again.

The memory 1303 is configured to store program instructions, data, and/or the like. Specifically, the program instructions may include program code. The program code includes computer operation instructions. The memory 1303 may include a RAM, or may include a non-volatile memory (non-volatile memory), for example, at least one magnetic disk storage. The processor 1302 executes the program instructions stored in the memory 1303, and implements the foregoing functions by using the data stored in the memory 1303, to implement the communication method provided in the foregoing embodiments of this application. The memory 1303 may be integrated with the processor 1302, or may be a memory outside the communication apparatus.

It may be understood that the memory 1303 in FIG. 13 in this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the methods provided in the foregoing embodiments are enabled to be performed.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a gateway device, a first request from a terminal, wherein the first request is for requesting to provide services of M network slices for the terminal, and M is a positive integer greater than or equal to 2;
determining, by the gateway device, first allowed network slice selection assistance information NSSAI, wherein the first allowed NSSAI comprises identifiers of N network slices in the M network slices, the N network slices comprise a network slice allowed by different core network devices to provide a service for the terminal, and N is a positive integer greater than or equal to 2 and less than or equal to M; and
sending, by the gateway device, the first allowed NSSAI to the terminal.

2. The method according to claim 1, wherein determining, by the gateway device, the first allowed NSSAI comprises:
requesting, by the gateway device, first information from at least one core network device, wherein the first information is for determining the first allowed NSSAI;
receiving, by the gateway device, at least one piece of first information; and
determining, by the gateway device, the first allowed NSSAI based on the at least one piece of first information.

3. The method according to claim 2, wherein the first information comprises at least one of the following:
first subscription information of the terminal, wherein the first subscription information indicates a network slice that the terminal subscribes to;
information indicating whether the terminal subscribes to P network slices in the M network slices, wherein P is a positive integer less than or equal to M; and
at least one piece of second allowed NSSAI, wherein the at least one piece of second allowed NSSAI comprises identifiers of Q network slices in the M network slices, Q is a positive integer less than or equal to M, and the Q network slices are network slices that are allowed by one of the at least one core network device to provide services for the terminal.

4. The method according to claim 1, wherein determining, by the gateway device, the first allowed NSSAI comprises:
sending, by the gateway device, a first message to a first core network device, wherein the first message is for requesting second information, and the second information is for determining the first allowed NSSAI;
receiving, by the gateway device, the second information from the first core network device; and
determining, by the gateway device, the first allowed NSSAI based on the second information.

5. The method according to any one of claims 1 to 4, further comprising:
obtaining, by the gateway device, a network slice list supported by the at least one core network device; and
sending, by the gateway device, third information to an access network device managed by the gateway device, wherein the third information indicates a first network slice list, and the first network slice list comprises identifiers of all network slices supported by the at least one core network device.

6. The method according to any one of claims 1 to 4, further comprising:
obtaining, by the gateway device, a network slice list supported by the at least one core network device; and
sending, by the gateway device, fourth information to an access network device managed by the gateway device, wherein the fourth information indicates a network slice list supported by each core network device in the at least one core network device.

7. The method according to any one of claims 1 to 6, further comprising:
obtaining, by the gateway device, a network slice list supported by each tracking area TA of at least one access network device managed by the gateway device; and
sending, by the gateway device, fifth information to a second core network device, wherein the fifth information indicates a second network slice list, and the second network slice list comprises identifiers of all network slices supported by each TA of the at least one access network device.

8. The method according to any one of claims 1 to 6, further comprising:
obtaining, by the gateway device, a network slice list supported by each TA of at least one access network device managed by the gateway device; and
sending, by the gateway device, sixth information to a second core network device, wherein the sixth information indicates a network slice list supported by each TA of each access network device in the at least one access network device.

9. A communication method, comprising:
sending, by an access network device, a first request from a terminal to a gateway device that manages the access network device, wherein the first request is for requesting to provide services of M network slices for the terminal, and M is a positive integer greater than or equal to 2; and
receiving, by the access network device, first allowed network slice selection assistance information NSSAI from the gateway device, wherein the first allowed NSSAI comprises N network slices in the M network slices, the N network slices comprise a network slice allowed by different core network devices to provide a service for the terminal, and N is a positive integer greater than or equal to 2 and less than or equal to M.

10. The method according to claim 9, further comprising:
receiving, by the access network device, third information from the gateway device, wherein the third information indicates a first network slice list, and the first network slice list comprises identifiers of all network slices supported by the at least one core network device.

11. The method according to claim 9, further comprising:
receiving, by the access network device, fourth information from the gateway device, wherein the fourth information indicates a network slice list supported by each of at least one core network device.

12. A communication method, comprising:
receiving, by a first core network device, a first message from a gateway device, wherein the first message is for requesting second information, the second information is for determining first allowed network slice selection assistance information NSSAI, the first allowed NSSAI comprises N network slices, the N network slices belong to M network slices that request to provide a service for a terminal, the N network slices comprise a network slice allowed by different core network devices to provide a service for the terminal, and N is a positive integer greater than or equal to 2 and less than or equal to M; and
sending, by the first core network device, the second information to the gateway device.

13. The method according to claim 12, further comprising:
requesting, by the first core network device in response to the first message, seventh information from a third core network device; and
determining, by the first core network device, the second information based on the seventh information.

14. The method according to claim 12 or 13, further comprising:
receiving, by the first core network device, fifth information from the gateway device, wherein the fifth information indicates a second network slice list, and the second network slice list comprises identifiers of all network slices supported by each tracking area TA of at least one access network device managed by the gateway device.

15. The method according to claim 12 or 13, further comprising:
receiving, by the first core network device, sixth information from the gateway device, wherein the sixth information indicates a network slice list supported by each TA of each access network device in at least one access network device managed by the gateway device.

16. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 15 by using a logic circuit or by executing code instructions.

17. A computer-readable storage medium, wherein the storage medium stores a computer program or instructions; and when the computer program or the instructions are executed by a communication apparatus, the method according to any one of claims 1 to 15 is implemented.
